# EUROPÄISCHE PATENTSCHRIFT

(11) **EP 2 121 793 B1**
(45) Veröffentlichungstag und Bekanntmachung des Hinweises auf die Patenterteilung: **13.07.2016**
(21) Anmeldenummer: 08716837.3
(22) Anmeldetag: 13.02.2008
(51) Int. Cl.: C08G 18/67, C08G 18/78, C09D 11/00, C09D 11/10, C09B 67/00, C09D 175/16, C08K 5/13, C08K 3/00, C08G 18/72

(54) **DISPERSIONEN VON POLYURETHANEN, IHRE HERSTELLUNG UND VERWENDUNG**
DISPERSIONS OF POLYURETHANES, THEIR PREPARATION AND USE
DISPERSIONS DE POLYURÉTHANES, LEUR PRÉPARATION ET LEUR UTILISATION

(30) Priorität: 15.02.2007 EP 07102502
(43) Veröffentlichungstag der Anmeldung: 25.11.2009
(73) Patentinhaber: BASF SE, 67056 Ludwigshafen am Rhein (DE)
(72) Erfinder: TÜRK, Holger, 68161 Mannheim (DE); SIMPSON, Paul Andrew, 67063 Ludwigshafen (DE); DIEHLMANN, Gernot, 68623 Lampertheim (DE)
(74) Vertreter: BASF IP Association
(86) Internationale Anmeldenummer: PCT/EP2008/051757
(87) Internationale Veröffentlichungsnummer: WO 2008/098972

(56) Entgegenhaltungen:
- EP-B- 1 144 476
- WO-A-01/23453
- WO-A-2005/080484
- WO-A-2006/089933
- WO-A-2006/089935

## Beschreibung

Die vorliegende Erfindung betrifft wässrige Dispersionen, enthaltend ein zumindest partiell mit einem Polyurethan (A) umhülltes Pigment (B) und weiterhin mindestens einen Polymerisationsinhibitor (C), wobei Polyurethan (A) erhältlich ist durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindung mit mindestens zwei mit Isocyanat zur Reaktion befähigten Gruppen,
wobei Angaben in Gew.-% auf gesamtes Polyurethan (A) bezogen sind.

Weiterhin betrifft die vorliegende Erfindung die Herstellung von erfindungsgemäßen mindestens partiell umhüllten Pigmenten und erfindungsgemäßen wässrigen Dispersionen sowie ihre Verwendung.

Häufig ist man vor die Aufgabe gestellt, Pigmente in flüssigem und insbesondere wässrigem Medium zu dispergieren, um sie beispielsweise zu Aufzeichnungsflüssigkeiten und insbesondere Tinten weiterzuverarbeiten. Besonders strenge Anforderungen stellt man dabei an Tinten, die beim Ink-Jet-Verfahren (Tintenstrahldruckverfahren wie Thermal Ink Jet, Piezo Ink Jet, Continuous Ink Jet, Valve Jet, Transferdruckverfahren) eingesetzt werden. Sie müssen zum Drucken geeignete Viskosität und Oberflächenspannung aufweisen, sie müssen lagerstabil sein, d.h., sie sollen nicht koagulieren oder flokulieren, und sie dürfen nicht zur Verstopfung der Druckerdüse führen, was insbesondere bei dispergierten, also nicht gelöste Farbmittelteilchen enthaltenden Tinten problematisch sein kann. Die Anforderungen an die Lagerstabilität dieser Aufzeichnungsflüssigkeiten und insbesondere Tinten beinhaltet zusätzlich, dass sich dispergierte Farbmittelteilchen nicht absetzen. Weiterhin müssen die Tinten im Falle des Continuous Ink Jet stabil gegen den Zusatz von Leitsalzen sein und bei Erhöhung des lonengehaltes keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B. Reibechtheit, Lichtechtheit, Wasserechtheit und Nassreibechtheit, gegebenenfalls nach Nachbehandlung wie beispielsweise Fixierung, und gutes Trocknungsverhalten aufweisen.

Um besonders gute Echtheiten wie beispielsweise Reibechtheit, Nassreibechtheit und Waschechtheit von bedruckten Substraten zu gewährleisten, kann man Drucke durch sogenannte Strahlungshärtung fixieren. Dazu kann man sogenannte strahlungshärtbare Tinten einsetzen, s. beispielsweise US 5,623,001 und EP 0 993 495. Strahlungshärtbare Ink-Jet-Tinten enthalten üblicherweise ein Material, dass durch Einstrahlung von aktinischer Strahlung gehärtet werden kann. Außerdem kann man strahlungshärtbaren Ink-Jet-Tinten einen Photoinitiator beifügen.

In WO 2006/089933 werden wässrige Dispersionen offenbart, die Allophanatgruppenhaltige strahlungshärtbare Polyurethane enthalten, sowie die Verwendung der betreffenden Dispersionen in Ink-Jet-Tinten. Man erhält, wenn man die offenbarten Ink-Jet-Tinten verdruckt, nach der Einwirkung von aktinischer Strahlung bedruckte Substrate mit sehr guten Echtheiten. In vielen Fällen ist es jedoch gar nicht gewünscht, beim Aushärten der Drucke auf aktinische Strahlung angewiesen zu sein. Eine gleichmäßige Aushärtung von Drucken auf nicht-ebenen Substraten setzt eine optimierte Geometrie der Strahlungsquellen voraus, die nicht immer gewährleistet werden kann. Eine thermische Aushärtung der in WO 2006/089933 offenbarten Tinten ist jedoch nur in solchen Fällen möglich, in denen die betreffenden Tinten ohne Stabilisator (Radikalfänger, Polymerisationsinhibitor) hergestellt sind. Derartige Tinten hingegen weisen in einigen Fällen eine eingeschränkte Lagerfähigkeit auf.

Es bestand also die Aufgabe, wässrige Dispersionen von Pigmenten bereit zu stellen. Es bestand weiterhin die Aufgabe, Tinten für das Ink-Jet-Verfahren bereit zu stellen, die sich besonders gut durch Einwirkung aktinischer Strahlung und/oder thermisch aushärten lassen und gleichzeitig eine gute Lagerfähigkeit aufweisen. Weiterhin bestand die Aufgabe, Verfahren zur Herstellung von Tinten für das Ink-Jet-Verfahren bereit zu stellen. Schließlich bestand die Aufgabe, bedruckte Substrate und insbesondere bedruckte textile Substrate bereit zu stellen, die einen besonders guten Griff und gute Echtheiten aufweisen.

Dementsprechend wurden eingangs definierte wässrige Dispersionen gefunden.

Im Rahmen der vorliegenden Erfindung werden die Ausdrücke "Tinten für das Ink-Jet-Verfahren" und "Ink-Jet-Tinten" äquivalent verwendet.

Unter Polyurethanen sind im Rahmen der vorliegenden Erfindung nicht nur solche Polymere zu verstehen, die ausschließlich durch Urethangruppen verknüpft sind, sondern in einem allgemeineren Sinne Polymere, die durch Umsetzung von Di- oder Polyisocyanaten mit Verbindungen erhalten werden können, die aktive Wasserstoffatome enthalten. Polyurethane im Sinne der vorliegenden Erfindung können also neben Urethangruppen auch Harnstoff-, Allophanat-, Biuret-, Carbodiimid-, Amid-, Ester, Ether-, Uretonimin-, Uretdion-, Isocyanurat- oder Oxazolidingruppen enthalten. Als Übersicht sei beispielhaft genannt: Kunststoffhandbuch/Saechtling, 26. Auflage, Carl-Hanser-Verlag, München 1995, Seite 491 ff. Insbesondere enthalten Polyurethane im Sinne der vorliegenden Erfindung Allophanatgruppen.

In einer Ausführungsform der vorliegenden Erfindung handelt es sich bei Polyurethan (A) nicht um hyperverzweigtes Polyurethan. Hyperverzweigte Polyurethane sind als solche bekannt und beispielsweise in J.M.S. - Rev. Macromol. Chem. Phys. 1997, C37(3), 555 beschrieben.

Erfindungsgemäße wässrige Dispersionen enthalten ein zumindest partiell mit einem Polyurethan (A) umhülltes Pigment (B).

Dabei wird im Folgenden unter "zumindest partiell mit mindestens einem Polyurethan umhülltem Pigment" solches Pigment in partikulärer Form verstanden, dessen äußere Oberfläche vollständig oder teilweise von Polyurethan (A) bedeckt ist. Auch Mischungen von Pigment in partikulärer Form, bei denen ein gewisser Prozentsatz der Pigmentpartikel nicht mit Polyurethan (A) umhüllt ist und bei denen die äußere Oberfläche der übrigen Pigmentpartikel vollständig oder teilweise von Polyurethan (A) bedeckt sind, fallen unter die Definition von "zumindest partiell mit einem Polyurethan (A) umhülltem Pigment".

Dabei kann es sich bei Polyurethan (A) um ein oder mehrere Polyurethane (A) handeln. Wenn es sich um mehrere Polyurethane handelt, so werden Zahlenangaben im Zusammenhang mit Polyurethan (A) stets auf die Gesamtheit an Polyurethanen (A) bezogen.

In einer Ausführungsform der vorliegenden Erfindung sind in zumindest partiell mit mindestens einem Polyurethan (A) umhülltem Pigment mindestens 10%, bevorzugt mindestens 20% und besonders bevorzugt mindestens 30% der äußeren Oberfläche mit Polyurethan (A) bedeckt.

Der Grad der Umhüllung lässt sich beispielsweise durch Messung des Zeta-Potenzials, durch mikroskopische Methoden wie beispielsweise Lichtmikroskopie oder Methoden der Elektronenmikroskopie (TEM, Kryo-TEM, SEM) und ganz speziell mit Hilfe der Gefrierbruchpräparationstechnik, NMR-Spektroskopie oder Photoelektronenspektroskopie an getrocknetem zumindest partiell umhülltem Pigment bestimmen.

Zumindest partiell zu umhüllende Pigmente (B) erhält man im Rahmen der vorliegenden Erfindung durch zumindest partielles Umhüllen von in Wasser praktisch nicht löslichen feinteiligen organischen oder anorganischen Farbmitteln gemäß der Definition in DIN 55944. Bevorzugt geht man zur Herstellung von erfindungsgemäßen wässrigen Dispersionen von organischen Pigmenten aus, wobei Ruß mit umfasst ist. Im Folgenden sind Beispiele für besonders gut geeignete Pigmente (B) genannt.

### Organische Pigmente:

- - Monoazopigmente:: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- - Disazopigmente:: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- - Anthanthronpigmente:: C.I. Pigment Red 168 (C.I. Vat Orange 3);
- - Anthrachinonpigmente:: C.I. Pigment Yellow 147 und 177; C.I. Pigment Violet 31;
- - Anthrachinonpigmente:: C.I. Pigment Yellow 147 und 177; C.I. Pigment Violet 31;
- - Anthrapyrimidinpigmente:: C.I. Pigment Yellow 108 (C.I. Vat Yellow 20);
- - Chinacridonpigmente:: C.I. Pigment Red 122, 202 und 206; C.I. Pigment Violet 19;
- - Chinophthalonpigmente:: C.I. Pigment Yellow 138;
- - Dioxazinpigmente:: C.I. Pigment Violet 23 und 37;
- - Flavanthronpigmente:: C.I. Pigment Yellow 24 (C.I. Vat Yellow 1);
- - Indanthronpigmente:: C.I. Pigment Blue 60 (C.I. Vat Blue 4) und 64 (C.I. Vat Blue 6);
- - Isoindolinpigmente:: C.I. Pigment Orange 69; C.I. Pigment Red 260; C.I. Pigment Yellow 139 und 185;
- - Isoindolinonpigmente:: C.I. Pigment Orange 61; C.I. Pigment Red 257 und 260; C.I. Pigment Yellow 109, 110, 173 und 185;
- - Isoviolanthronpigmente:: C.I. Pigment Violet 31 (C.I. Vat Violet 1);
- - Metallkomplexpigmente:: C.I. Pigment Yellow 117, 150 und 153; C.I. Pigment Green 8;
- - Perinonpigmente:: C.I. Pigment Orange 43 (C.I. Vat Orange 7); C.I. Pigment Red 194 (C.I. Vat Red 15);
- - Perylenpigmente:: C.I. Pigment Black 31 und 32; C.I. Pigment Red 123, 149, 178, 179 (C.I. Vat Red 23), 190 (C.I. Vat Red 29) und 224; C.I. Pigment Violet 29;
- - Phthalocyaninpigmente:: C.I. Pigment Blue 15, 15:1, 15:2, 15:3, 15:4, 15:6 und 16; C.I. Pigment Green 7 und 36;
- - Pyranthronpigmente:: C.I. Pigment Orange 51; C.I. Pigment Red 216 (C.I. Vat Orange 4);
- - Thioindigopigmente:: C.I. Pigment Red 88 und 181 (C.I. Vat Red 1); C.I. Pigment Violet 38 (C.I. Vat Violet 3);
- - Triarylcarboniumpigmente:: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
- C.I.: Pigment Yellow 101 (Aldazingelb);
- C.I.: Pigment Brown 22.

### Anorganische Pigmente:

- - Weißpigmente:: Titandioxid (C.I. Pigment White 6), Zinkweiß, Farbenzinkoxid, Bariumsulfat, Zinksulfid, Lithopone; Bleiweiß;
- - Schwarzpigmente:: Eisenoxidschwarz (C.I. Pigment Black 11), Eisen-Mangan-Schwarz, Spinellschwarz (C.I. Pigment Black 27); Ruß (C.I. Pigment Black 7);
- - Buntpigmente:: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot;

Eisenoxidbraun, Mischbraun, Spinell- und Korundphasen (C.I. Pigment Brown 24, 29 und 31), Chromorange;

Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- - Interferenzpigmente:: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente (B) sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße zu nennen.

Beispiele für besonders bevorzugte Pigmente (B) sind im einzelnen: Ruß, C.I. Pigment Yellow 138, C.I. Pigment Red 122 und 146, C.I. Pigment Violet 19, C.I. Pigment Blue 15:3 und 15:4, C.I. Pigment Black 7, C.I. Pigment Orange 5, 38 und 43 und C.I. Pigment Green 7.

In einer Ausführungsform der vorliegenden Erfindung weist Polyurethan (A) eine Glastemperatur, bestimmbar beispielsweise durch Differentialthermoanalyse (DSC), von maximal 50°C auf, bevorzugt maximal 40°C.

Polyurethane (A) im Sinne der vorliegenden Erfindung sind erhältlich durch Umsetzung von
(a) 15 bis 70 Gew.-%, bevorzugt 30 bis 60 Gew.-% Di- oder Polyisocyanat, das im Mittel.1 bis 10 Allophanatgruppen und im Mittel 1 bis 10 C-C-Doppelbindungen pro Molekül aufweist, wobei Mittelwerte sich vorzugsweise jeweils auf das Zahlenmittel beziehen, mit
(b) null bis 60 Gew.-%, bevorzugt bis 20 Gew.-% weiterem Di- oder Polyisocyanat und
(c) 5 bis 50 Gew.-%, bevorzugt 30 bis 50 Gew.-% Verbindung mit mindestens zwei mit Isocyanat zur Reaktion befähigten Gruppen.

Bei mindestens einem Di- oder Polyisocyanat (a), das im Mittel 1 bis 10, bevorzugt bis 5 Allophanatgruppen und im Mittel pro Molekül 1 bis 10, bevorzugt bis 5 C-C-Doppelbindungen pro Molekül aufweist, wobei Mittelwerte sich jeweils auf das Gewichtsmittel und bevorzugt auf das Zahlenmittel beziehen, handelt es sich um eine Verbindung, die vorzugsweise in Gegenwart eines Katalysators hergestellt wird aus mindestens einem Diisocyanat (a1) mit mindestens einer Verbindung der allgemeinen Formel I 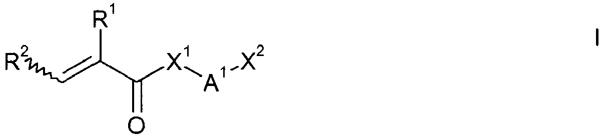 im Rahmen der vorliegenden Erfindung auch kurz Verbindung (a2) genannt, wobei die Variablen wie folgt definiert sind:
- R¹, R²: gleich oder verschieden und unabhängig voneinander gewählt aus Wasserstoff und C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
- X¹: gewählt aus Sauerstoff und N-R³,
- A¹: gewählt aus C₁-C₂₀-Alkylen, bevorzugt C₂-C₁₀-Alkylen, beispielsweise -CH₂-,
-(CH₂)₁₂-, -(CH₂)₁₄-, -(CH₂)₁₆-, -(CH₂)₂₀-, bevorzugt
-(CH₂)₂-, -(CH₂)₃-, -(CH₂)₄-, -(CH₂)₅-, -(CH₂)₆-, -(CH₂)₈-, -(CH₂)₁₀-,
unsubstituiert oder ein- oder mehrfach substituiert mit
C₁-C₄-Alkyl, beispielsweise Methyl, Ethyl, n-Propyl, iso-Propyl, n-Butyl,
iso-Butyl, sec.-Butyl oder tert.-Butyl, bevorzugt Methyl, Phenyl oder
-O-C₁-C₄-Alkyl, beispielsweise -O-CH₃, -O-C₂H₅, -O-n-C₃H₇,
-O-CH(CH₃)₂, -O-n-C₄H₉, -O-iso-C₄H₉, -O-sec-C₄H₉, -O-C(CH₃)₃,
an substituierten C₁-C₂₀-Alkylen seien beispielsweise genannt -CH(CH₃), -CH(C₂H₅)-, -CH(C₆H₅)-,-CH₂-CH(CH₃)-, cis- und trans-CH(CH₃)-CH(CH₃)-, -(CH₂)-C(CH₃)₂-CH₂-, -CH₂-CH(C₂H₅)-,
-CH₂-CH(n-C₃H₇)-, -CH₂-CH(iso-C₃H₇)-,
wobei in unsubstituiertem oder substituiertem C₁-C₂₀-Alkylen eine oder mehrere nicht-benachbarte CH₂-Gruppen durch Sauerstoff ersetzt sein können, beispielsweise -CH₂-O-CH₂-, -(CH₂)₂-O-(CH₂)₂-, -[(CH₂)₂-O]₂-(CH₂)₂--[(CH₂)₂-O]₃-(CH₂)₂-.
- X²: gewählt aus NH-R³ und bevorzugt Sauerstoff,
- R³: verschieden oder vorzugsweise gleich und gewählt aus Wasserstoff, Phenyl und
C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, E-thyl, n-Propyl, iso-Propyl, n-Butyl, iso-Butyl, sec.-Butyl und tert.-Butyl, insbe-sondere Methyl.

Ganz besonders bevorzugte Verbindungen der allgemeinen Formel I sind 2-Hydroxyethyl(meth)acrylat und 3-Hydroxypropyl(meth)acrylat.

Man kann Polyurethan in Abwesenheit oder vorzugsweise in Anwesenheit mindestens eines Katalysators herstellen.

Als Katalysatoren kommen beispielsweise alle in der Polyurethanchemie üblicherweise verwendeten Katalysatoren in Betracht.

Üblicherweise in der Polyurethanchemie verwendete Katalysatoren sind bevorzugt organische Amine, insbesondere tertiäre aliphatische, cycloaliphatische oder aromatische Amine, und Lewis-saure organische Metallverbindungen.

Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-derivate von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Zinks, Aluminiums, Zirkons, Mangans, Nickels und Cobalts sind möglich. Weitere geeignete Metallverbindungen werden von Blank et al. in Progress in Organic Coatings, 1999, 35, 19 ff. beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut-, Zink- und Cobaltkatalysatoren sowie Cäsiumsalze können als hydrophile Katalysatoren eingesetzt werden. Als Cäsiumsalze kommen dabei solche Verbindungen in Betracht, in denen folgende Anionen eingesetzt werden: F-, Cl-, CIO-, ClO₃⁻, ClO₄⁻, Br-, J-, JO₃-, CN-, OCN-, NO₂-, NO₃-, HCO₃-, CO₃²⁻, S²⁻, SH-, HSO₃-, SO₃²⁻, HSO₄⁻, SO₄²⁻, S₂O₂²⁻, S₂₄², S₂O₅² , S₂O₆², S₂O₇² , S₂O₈²-, H₂PO₂ , H₂PO₄-, HPO₄²⁻, PO₄³⁻, P₂O₇⁴⁻, (OCₙH₂ₙ₊₁)-, (CₙH₂ₙ₋₁O₂)-, (CₙH₂ₙ₋₃O₂)- Sowie (Cₙ₊₁H₂ₙ₋₂O₄)²⁻, wobei n für die Zahlen 1 bis 20 steht.

Bevorzugt sind dabei Zink- und Cäsiumcarboxylate, bei denen das Anion den Formeln (CₙH₂ₙ₋₁O₂)- sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)- auf, wobei n für die Zahlen 1 bis 20 steht. Hierbei sind insbesondere zu erwähnen Formiat, Acetat, Propionat, Hexanoat, 2-Ethylhexanoat, n-Octanoat und Neodecanoat.

Als übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethylbutan-1,4-diamin, N,N,N',N'-Tetramethylhexan-1,6-diamin, Dimethylcyclohexylamin, Dimethyldodecylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)ether, N-Ethylmorpholin, N-Methylmorpholin, N-Cyclohexylmorpholin, 2-Dimethylaminoethoxyethanol, Dimethylethanolamin, Tetramethylhexamethylendiamin, Dimethylamino-N-methylethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, Tris-(N,N-dimethylaminopropyl)-s-hexahydrotriazin, Imidazole wie 1,2-Dimethylimidazol, 4-Chlor-2,5-dimethyl-1-(N-methylaminoethyl)imidazol, 2-Aminopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol.

Bevorzugte organische Amine sind Trialkylamine mit unabhängig voneinander zwei C₁-bis C₄-Alkylresten und einem Alkyl- oder Cycloalkylrest mit 4 bis 20 Kohlenstoffatomen, beispielsweise Dimethyl-C₄-C₁₅-Alkylamin wie Dimethyldodecylamin oder Dimethyl-C₃-C₈-Cycloalkylamin. Ebenfalls bevorzugte organische Amine sind bicyclische Amine, die gegebenenfalls ein weiteres Heteroatom wie Sauerstoff oder Stickstoff enthalten können, wie beispielsweise 1,4-Diazabicyclo-[2,2,2]-octan.

Besonders bevorzugt setzt man Ammoniumacetat oder Triethylamin und ganz besonders bevorzugt N,N,N-Trimethyl-N-(2-hydroxypropyl)ammonium-2-ethylhexanoat ein.

Selbstverständlich können auch Gemische aus zwei oder mehreren der vorstehend genannten Verbindungen als Katalysatoren eingesetzt werden.

Besonders bevorzugt verwendet man solche Katalysatoren, gewählt aus den vorstehend genannten Verbindungen, welche in organischen Lösungsmitteln wie Aceton, Tetrahydrofuran (THF), N-Methylpyrrolidon und/oder N-Ethylpyrrolidon lösliche sind.

Katalysator setzt man vorzugsweise in einer Menge von 0,0001 bis 10 Gew.-%, besonders bevorzugt in einer Menge von 0,001 bis 5 Gew.-% ein, bezogen auf Diisocyanat (a1).

Man kann - je nach Beschaffenheit des Katalysators oder der Katalysatoren - den oder die Katalysatoren in fester oder flüssiger Form oder gelöst zusetzen. Geeignete Lösemittel sind mit Wasser nicht mischbare Lösungsmittel wie aromatische oder aliphatische Kohlenwasserstoffe wie beispielsweise Toluol, Ethylacetat, Hexan und Cyclohexan sowie Carbonsäureester wie beispielsweise Ethylacetat, weiterhin geeignete Lösemittel sind Aceton, THF und N-Methylpyrrolidon und N-Ethylpyrrolidon. Bevorzugt setzt man den oder die Katalysatoren in fester oder flüssiger Form und ganz besonders bevorzugt gelöst in organischen Lösungsmitteln wie Aceton, Tetrahydrofuran (THF), N-Methylpyrrolidon oder N-Ethylpyrrolidon zu.

Diisocyanat (a1) wählt man beispielsweise aus aliphatischen, aromatischen und cycloaliphatischen Diisocyanaten. Für aromatische Diisocyanate seien beispielhaft genannt: 2,4-Toluylendiisocyanat (2,4-TDI), 2,4'-Diphenylmethandiisocyanat (2,4'-MDI) und sogenannte TDI-Gemische (Gemische von 2,4-Toluylendiisocyanat und 2,6-Toluylendiisocyanat).

Als aliphatische Diisocyanate seien beispielhaft genannt: 1,4-Butylendiisocyanat, 1,12-Dodecamethylendiisocyanat, 1,10-Decamethylendiisocyanat, 2-Butyl-2-ethylpentamethylendiisocyanat, 2,4,4- oder 2,2,4-Trimethylhexamethylendiisocyanat und insbesondere Hexamethylendiisocyanat (HDI).

Als cycloaliphatische Diisocyanate seien beispielhaft genannt: Isophorondiisocyanat (IPDI), 2-Isocyanatopropylcyclohexylisocyanat, 2,4'-Methylenbis(cyclohexyl)-diisocyanat und 4-Methyl-cyclohexan-1,3-diisocyanat (H-TDI).

Weitere Beispiele von Isocyanaten mit Gruppen unterschiedlicher Reaktivität sind 1,3-Phenylendiisocyanat, 1,4-Phenylendiisocyanat, 1,5-Naphthylendiisocyanat, Diphenyldiisocyanat, Tolidindiisocyanat und 2,6-Toluylendiisocyanat.

Natürlich kann man Mischungen der vorstehend genannten Diisocyanate einsetzen.

Diisocyanat (a1) und Verbindung (a2) kann man in Molverhältnissen von beispielsweise 10:1 bis 1:1, bevorzugt 5:1 bis 5:4 einsetzen.

In einer Ausführungsform der vorliegenden Erfindung kann man Diisocyanat (a1) und Verbindung (a2) bei Temperaturen im Bereich von 20°C bis 150°C miteinander umsetzen, bevorzugt 50 bis 130°C.

In einer Ausführungsform der vorliegenden Erfindung kann man Diisocyanat (a1) und Verbindung (a2) in Lösungsmittel, vorzugsweise in einem organischen Lösungsmittel oder einem Gemisch von organischen Lösungsmitteln wie beispielsweise Toluol, Aceton oder Tetrahydrofuran oder Mischungen der vorgenannten Lösungsmittel. In einer anderen Ausführungsform der vorliegenden Erfindung verzichtet man bei der Umsetzung von Diisocyanat (a1) mit Verbindung (a2) auf den Einsatz von Lösungsmittel.

In einer Ausführungsform der vorliegenden Erfindung wählt man bei der Umsetzung von Diisocyanat (a1) mit Verbindung (a2) die Reaktionsbedingungen, beispielsweise die Molverhältnisse von Diisocyanat (a1) und Verbindung (a2), so, dass Diisocyanat (a) 2 Isocyanatgruppen und 1 bis 10 Allophanatgruppen und 1 bis 10 C-C-Doppelbindungen, aber keine O-CO-NH-Gruppen aufweist. In einer anderen Ausführungsform der vorliegenden Erfindung wählt man bei der Umsetzung von Diisocyanat (a1) mit Verbindung (a2) die Reaktionsbedingungen, beispielsweise die Molverhältnisse von Diisocyanat (a1) und Verbindung (a2), so, dass Diisocyanat (a) 2 Isocyanatgruppen und 1 bis 9 Allophanatgruppen und 1 bis 9 C-C-Doppelbindungen und außerdem eine oder mehrere O-CO-NH-Gruppen aufweist.

Man kann nach beendeter Umsetzung von Diisocyanat (a1) mit Verbindung (a2) Di- oder Polyisocyanat (a) isolieren, beispielsweise durch Abtrennen von nicht umgesetzten Ausgangsmaterialien wie Diisocyanat (a1) oder Verbindung (a2). Eine geeignete Methode der Abtrennung von nicht umgesetzten Ausgangsmaterialien wie Diisocyanat (a1) und Verbindung (a2) ist das Abdestillieren, vorzugsweise bei vermindertem Druck. Ganz besonders geeignet sind Dünnschichtverdampfer. Bevorzugt verzichtet man auf das Abdestillieren von nicht umgesetztem Diisocyanat (a1).

In einer Ausführungsform der vorliegenden Erfindung hat Di- oder Polyisocyanat (a) eine dynamische Viskosität bei 23° im Bereich von 500 bis 2000 mPa·s, bevorzugt 600 bis 1800 mPa·s, ganz besonders bevorzugt 700 bis 1500 mPa·s.

In einer Ausführungsform der vorliegenden Erfindung hat Di- oder Polyisocyanat (a) einen NCO-Gehalt im Bereich von 8 bis 20 Gew.-%, bevorzugt 12 bis 17 Gew.-%, bestimmbar beispielsweise durch Titration.

Zur Darstellung von Polyurethan (A) kann man Di- oder Polyisocyanat (a) mit mindestens einem weiteren Di- oder Polyisocyanat (b) umsetzen. Di- oder Polyisocyanat (b) kann man aus den oben genannten aliphatischen, aromatischen und cycloaliphatischen Diisocyanaten wählen.

In einer Ausführungsform der vorliegenden Erfindung wählt man Di- oder Polyisocyanat (b) so, dass es von Diisocyanat (a1) verschieden ist.

In einer Ausführungsform der vorliegenden Erfindung wählt man Di- oder Polyisocyanat (b) so, dass es gleich Diisocyanat (a1) ist. In einer speziellen Ausführungsform der vorliegenden Erfindung geht man so vor, dass man Di- oder Polyisocyanat (b) gleich Diisocyanat (a1) wählt, indem man nach beendeter Herstellung von Di- oder Polyisocyanat (a) nicht von nicht verbrauchtem Diisocyanat (a1) abtrennt.

Zur Darstellung von Polyurethan (A) setzt man mit mindestens einer Verbindung mit mindestens zwei mit Isocyanat zur Reaktion befähigten Gruppen (c) um, die im Rahmen der vorliegenden Erfindung auch als Verbindung (c) bezeichnet wird. Besonders gut zur Reaktion mit Isocyanat befähigte Gruppen sind beispielsweise die SH-Gruppe, die Hydroxylgruppe, die NH₂-Gruppe und die NHR³-Gruppe, in der R³ wie oben genannt definiert ist.

Verbindung (c) kann hydrophil oder hydrophob sein.

Vorzugsweise wählt man mindestens eine Verbindung (c) aus
1,1,1-Trimethylol-C₁-C₄-Alkylcarbonsäuren, beispielsweise 1,1,1-Trimethylolessigsäure, 1,1,1-Trimethylolpropansäure, 1,1,1-Trimethylolbuttersäure,
Zitronensäure,
1,1-Dimethylol-C₁-C₄-Alkylcarbonsäuren, beispielsweise 1,1-Dimethylolessigsäure, 1,1-Dimethylolpropansäure, 1, 1-Dimethylolbuttersäure,
1,1-Dimethylol-C₁-C₄-Alkylsulfonsäuren,
Poly-C₂-C₃-alkylenglykolen mit im Mittel 3 bis 300 Alkylenoxideinheiten pro Molekül, insbesondere Polyethylenglykol mit im Mittel (Zahlenmittel) 3 bis 300 Ethylenoxideinheiten pro Molekül und Polyadditionsprodukte von Ethylenoxid und Propylenoxid mit im Mittel (Zahlenmittel) 3 bis 300 Ethylenoxideinheiten pro Molekül und einem molaren Anteil von Ethylenoxid, der höher ist als er Anteil an Propylenoxid;
hydrophile Diamine mit COOM- oder SO₃M-Gruppen, beispielsweise 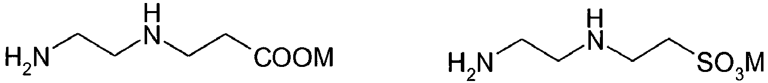 wobei M jeweils gewählt wird aus Alkalimetallionen, insbesondere Na⁺, und Ammoniumionen,
Polyesterdiolen, die herstellbar sind durch Polykondensation von
mindestens einem aliphatischen oder cycloaliphatischen Diol, bevorzugt Ethylenglykol, 1,4-Butandiol, 1,6-Hexandiol, cis-und trans-1,4-Cyclohexandiol, cis- und trans-1,4-Dihydroxymethylcyclohexan (Cylohexandimethanol),
mit mindestens einer aliphatischen, aromatischen oder cycloaliphatischen Dicarbonsäure, beispielsweise Bernsteinsäure, Glutarsäure, Adipinsäure, Cyclohexan-1,4-dicarbonsäure, Terephthalsäure, Isophthalsäure.

In einer Ausführungsform der vorliegenden Erfindung wählt man mindestens zwei Dicarbonsäuren zur Herstellung von Polyesterdiol, von denen eine aromatisch und die andere aliphatisch ist, beispielsweise Bernsteinsäure und Isophthalsäure, Glutarsäure und Isophthalsäure, Adipinsäure und Isophthalsäure, Bernsteinsäure und Terephthalsäure, Glutarsäure und Terephthalsäure, Adipinsäure und Terephthalsäure.

Wünscht man zur Herstellung von Polyesterdiol zwei oder mehr Dicarbonsäuren einzusetzen, so kann man beliebige Molverhältnisse wählen. Wünscht man eine aromatische und eine aliphatische Dicarbonsäure einzusetzen, so ist ein Molverhältnis im Bereich von 10 : 1 bis 1 : 10 bevorzugt, besonders ist ein Molverhältnis im Bereich von 1,5 : 1 bis 1 : 1,5.

In einer Ausführungsform der vorliegenden Erfindung haben als Verbindung (c) eingesetzte Polyesterdiole eine Hydroxylzahl im Bereich von 20 bis 200 mg KOH/g, bevorzugt 50 bis 180 ganz besonders bevorzugt 100 bis 160 mg KOH/g, bestimmt nach DIN 53240.

In einer Ausführungsform der vorliegenden Erfindung haben als Verbindung (c) eingesetzte Polyesterdiole ein Molekulargewicht M_{w} im Bereich von 500 bis 100.000 g/mol, bevorzugt 700 bis 50.000 g/mol, besonders bevorzugt bis 30.000 g/mol.

Weitere geeignete Verbindungen (c) sind Ethanolamin, Diethanolamin, Neopentylglycol, 1,4-Butandiol, 1,6-Hexandiol, 1,1-Dimethylolpropan.

In einer Ausführungsform der vorliegenden Erfindung setzt man mit mindestens zwei Verbindungen (c) um, von denen eine gewählt wird aus Ethanolamin, Diethanolamin, Neopentylglycol, 1,4-Butandiol, 1,6-Hexandiol, 1,1-Dimethylolpropan.

In einer Ausführungsform der vorliegenden Erfindung kann man zur Synthese von Polyurethan (A)
(d) weiterhin mindestens eine Verbindung der allgemeinen Formel I zusetzen, und zwar bei der Umsetzung von
   Di- oder Polyisocyanat (a), und weiterem Di- oder Polyisocyanat (b), so vorhanden, mit Verbindung (c).

Verbindungen der Formel I sind vorstehend beschrieben.

Dabei kann man als Verbindung (d) der allgemeinen Formel I eine andere Verbindung der allgemeinen Formel I einsetzen als zur Herstellung von Di- oder Polyisocyanat (a), das im Mittel 1 bis 10 Allophanatgruppen und im Mittel 1 bis 10 C-C-Doppelbindungen pro Molekül enthält, eingesetzt. Vorzugsweise sind jedoch Verbindung (d) und Verbindung (a2) identisch.

Zur Durchführung der Synthese von Polyurethan (A) kann man nach an sich bekannten Methoden der Polyurethanchemie vorgehen.

Erfindungsgemäße wässrige Dispersionen enthalten weiterhin mindestens einen Polymerisationsinhibitor (C), auch Inhibitor (C) oder Stabilisator (C) genannt. Polymerisationsinhibitoren (C) kann man wählen aus UV-Absorbern und Radikalfängern. UV Absorber wandeln UV-Strahlung in Wärmeenergie um. Geeignete UV-Absorber sind z.B. Oxanilide, Triazine und Benzotriazol (letztere erhältlich als Tinuvin®-Marken der Ciba-Spezialitätenchemie), Benzophenone, Hydroxybenzophenone, Hydroquinon, Hydroquinonmonoalkylether wie z.B. Hydroquinonmonomethylether (MEHQ). Radikalfänger binden intermedär gebildete Radikale. Geeignete Radikalfänger sind beispielsweise sterisch gehinderte Amine, welche als HALS (Hindered Amine Light Stabilizers) bekannt sind. Beispiele dafür sind 2,2,6,6-Tetramethylpiperidin, 2,6-Di-tert.-butylpiperidin oder deren Derivaten, z. B. Bis-(2,2,6,6-tetra-methyl-4-piperidyl)sebacinat. Weitere geeignete Polymerisationsinhibitoren (C) sind substituierte Phenole, insbesondere mit tert.-Alkylresten substituierte Phenole wie beispielsweise

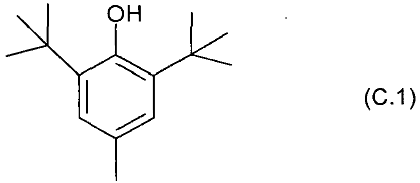

In einer Ausführungsform der vorliegenden Erfindung setzt man ein Gemisch von mehreren Polymerisationsinhibitoren (C) ein, beispielsweise einen Hydroquinonether und ein substituiertes Phenol.

Beispielsweise kann man insgesamt bis zu 15 Gew.-%, bezogen auf die Summe an (A) und (B), an Polymerisationsinhibitor (C) zusetzen, besonders bevorzugt 0,1 bis 1 Gew.-%.

Man kann Polymerisationsinhibitor (C) bereits während der Synthese von Polyurethan (A) zusetzen oder nachträglich, beispielsweise beim Dispergieren von Pigment (B).

In einer Ausführungsform der vorliegenden Erfindung kann man Di- oder Polyisocyanat (a), weiteres Di- oder Polyisocyanat (b) und Verbindung (c) und gegebenenfalls weiterer Verbindung der allgemeinen Formel I (d) in folgenden Gewichtsverhältnissen einsetzen, jeweils bezogen auf gesamtes Polyurethan (A):
15 bis 70 Gew.-%, bevorzugt 30 bis 60 Gew.-% Gew.-% Di- oder Polyisocyanat (a),
null bis 60 Gew.-%, bevorzugt bis 20 Gew.-% weiteres Di- oder Polyisocyanat (b),
5 bis 50 Gew.-%, bevorzugt 30 bis 50 Gew.-% Verbindung (c),
null bis 20 Gew.-%, bevorzugt bis 10 Gew.-% Verbindung der allgemeinen Formel I (d).

Dabei sind Angaben in Gew.-% jeweils auf gesamtes Polyurethan (A) bezogen.

In einer bevorzugten Variante der vorliegenden Erfindung setzt man zur Herstellung von Polyisocyanat (A) neben Di- oder Polyisocyanat (a), weiterem Di- oder Polyisocyanat (b) und Verbindung (c) und gegebenenfalls weiterer Verbindung der allgemeinen Formel I (d) noch mit mindestens einem nucleophilen Alkohol oder Amin, vorzugsweise Monoalkohol oder Monoamin, um, das bzw. der auch als Stopper dienen kann und im Folgenden als Stopper (e) bezeichnet wird. Beispiele für geeignete Stopper (e) sind Mono- und Di-C₁-C₄-alkylamine, insbesondere Diethylamin und N,N-Diethanolamin. Man kann bis zu 10 Gew.-% Stopper (e) einsetzen, bezogen auf zu synthetisierendes Polyurethan (A).

Man kann die Herstellung von Polyurethan (A) aus Di- oder Polyisocyanat (a), weiterem Di- oder Polyisocyanat (b), Verbindung (c) und gegebenenfalls weiterer Verbindung der allgemeinen Formel I (d) und gegebenenfalls Stopper (e) in einer Stufe oder in mehreren Stufen durchführen. Beispielsweise kann man Di- oder Polyisocyanat (a), weiteres Di- oder Polyisocyanat (b) und Verbindung (c) in einer ersten Stufe umsetzen, vorzugsweise unter Verwendung eines Katalysators, die Reaktion abstoppen und danach erneut Di- oder Polyisocyanat (b) und Verbindung der allgemeinen Formel I (d) und gegebenenfalls Stopper (e) zugeben. Es ist beispielsweise auch möglich, Di- oder Polyisocyanat (a), weiteres Di- oder Polyisocyanat (b) und Verbindung (c) miteinander umzusetzen, wobei man einen Überschuss an weiterem Di- oder Polyisocyanat (b) wählt, und die Reaktion durch Zugabe von Stopper (e) zu stoppen.

In einer Ausführungsform der vorliegenden Erfindung kann man Di- oder Polyisocyanat (a), weiteres Di- oder Polyisocyanat (b), Verbindung (c) und gegebenenfalls weitere Verbindung der allgemeinen Formel I (d) und gegebenenfalls Stopper (e) in Lösungsmittel, vorzugsweise in einem organischen Lösungsmittel oder einem Gemisch von organischen Lösungsmitteln wie beispielsweise Toluol, Aceton oder Tetrahydrofuran oder Mischungen der vorgenannten Lösungsmittel umsetzen. In einer anderen Ausführungsform der vorliegenden Erfindung verzichtet man bei der Umsetzung von Di- oder Polyisocyanat (a), weiterem Di- oder Polyisocyanat (b), Verbindung (c) und gegebenenfalls weiterer Verbindung der allgemeinen Formel I (d) und gegebenenfalls Stopper (e) auf den Einsatz von Lösungsmittel.

In einer Ausführungsform der vorliegenden Erfindung kann man Di- oder Polyisocyanat (a), weiteres Di- oder Polyisocyanat (b) und Verbindung (c) und gegebenenfalls weiterer Verbindung der allgemeinen Formel I (d) und gegebenenfalls Stopper (e) bei Temperaturen im Bereich von 20°C bis 150°C miteinander umsetzen, bevorzugt 20 bis 80°C.

Zur Beschleunigung der Umsetzung von Di- oder Polyisocyanat (a), weiterem Di- oder Polyisocyanat (b), Verbindung (c) und gegebenenfalls weiterer Verbindung der allgemeinen Formel I (d) und gegebenenfalls Stopper (e) kann man einen oder mehrere Katalysatoren einsetzen, den bzw. die man vorteilhaft aus den vorstehend genannten Katalysatoren wählt.

Man kann nach beendeter Umsetzung von Di- oder Polyisocyanat (a), weiterem Di- oder Polyisocyanat (b), Verbindung (c) und gegebenenfalls weiterer Verbindung der allgemeinen Formel I (d) und gegebenenfalls Stopper (e) Polyurethan (A) isolieren, beispielsweise durch Abtrennen von nicht umgesetzten Ausgangsmaterialien wie Di- oder Polyisocyanat (b), Verbindung (c) und gegebenenfalls weiterer Verbindung der allgemeinen Formel I (d) und gegebenenfalls Stopper (e). Eine geeignete Methode der Abtrennung von nicht umgesetzten Ausgangsmaterialien wie (b) und (c) und gegebenenfalls (d) und (e) ist das Abdestillieren, vorzugsweise bei vermindertem Druck. Ganz besonders geeignet sind Dünnschichtverdampfer. Bevorzugt verzichtet man auf das Abdestillieren von nicht umgesetztem Di- oder Polyisocyanat (b).

Das Molekulargewicht M_{w} der Polyurethane (A) kann beispielsweise 500 bis maximal 50.000 g/mol betragen, bevorzugt 1.000 bis 30.000 g/mol, besonders bevorzugt 2.000 bis 25.000 g/mol und ganz besonders bevorzugt mindestens 2.000 g/mol, bestimmt beispielsweise durch Gelpermeationschromatographie (GPC).

In einer bevorzugten Ausführungsform der vorliegenden Erfindung enthält Polyurethan (A) keine freien NCO-Gruppen.

Nach erfolgter Umsetzung von Di- oder Polyisocyanat (a), weiterem Di- oder Polyisocyanat (b) und Verbindung (c) und gegebenenfalls (d) und gegebenenfalls Stopper (e) kann man Wasser zugeben, beispielsweise in einem Gewichtsverhältnis Polyurethan (A) zu Wasser im Bereich von 1 : 1 bis 1 : 10.

Nach erfolgter Umsetzung von Di- oder Polyisocyanat (a), weiterem Di- oder Polyisocyanat (b) und Verbindung (c) und gegebenenfalls (d) und Stopper (e) kann man Gruppen, die über ausreichend acide H-Atome verfügen, durch Behandlung mit Basen in die entsprechenden Salze überführen. Gut geeignete Basen sind beispielsweise Hydroxide und Hydrogencarbonate von Alkalimetallen oder Erdalkalimetallen oder die Carbonate von Alkalimetallen. Weitere gut geeignete Basen sind flüchtige Amine, d.h. Amine mit einem Siedepunkt bis 180°C bei Atmosphärendruck, wie beispielsweise Ammoniak, Methylamin, Dimethylamin, Trimethylamin, Ethylamin, Diethylamin, Triethylamin, Ethanolamin, N-Methyldiethanolamin oder Triethanolamin. Analog lassen sich basische Gruppen mit Säuren wie beispielsweise α-Hydroxycarbonsäuren oder α-Aminosäuren oder auch α-Hydroxysulfonsäuren in die entsprechenden Salze überführen.

Nach erfolgter Umsetzung von Di- oder Polyisocyanat (a), weiterem Di- oder Polyisocyanat (b) und Verbindung (c) gegebenenfalls (d) und Stopper (e) kann man eventuell eingesetztes organisches Lösungsmittel abtrennen, beispielsweise durch Destillation.

Im Anschluss an die Herstellung von Polyurethan (A) gibt man ein oder mehrere Pigmente (B) und gegebenenfalls Wasser zu. Vorzugsweise stellt man einen Feststoffgehalt im Bereich von bis 3 bis 40%, bevorzugt bis 35%, besonders bevorzugt 5 bis 30% ein.

Das Gewichtsverhältnis von Polyurethan (A) zu Pigment (B) kann man in weiten Grenzen variieren. In einer Ausführungsform der vorliegenden Erfindung liegt das Gewichtsverhältnis von Polyurethan (A) zu Pigment (B) in einem Bereich von 5:1 bis 1:3, bevorzugt 3:1 bis 1:2, besonders bevorzugt 2:1 bis 2:3.

Anschließend dispergiert man Polyurethan (A) und Pigment (B). Das Dispergieren kann man in beliebigen zum Dispergieren geeigneten Apparaten durchführen. Beispielhaft seien Schüttelapparaturen wie z.B. der Fa. Skandex genannt. Bevorzugt dispergiert Polyurethan (A) und Pigment (B) beispielsweise in Ultraschallapparaturen, Hochdruckhomogenisatoren, 2-, 3-, 4- oder 5-Walzenmühlen, Minimühlen, Henschelmischern, Schüttelmühlen, Angmühlen, Zahnmühlen, Perlmühlen, Nassmühlen, Sandmühlen, Attritoren, Kolloidmühlen, Ultraschallhomogenisatoren, mit Ultra-Turrax-Rührer und insbesondere durch Mahlung, beispielsweise in 2-, 3-, 4- oder 5-Walzenmühlen, Minimühlen, Schüttelmühlen, Angmühlen, Zahnmühlen, Perlmühlen, Nassmühlen, Sandmühlen, Kolloidmühlen, Kugelmühlen, speziell Rührwerkskugelmühlen.

Als geeignete Zeitdauer für das Dispergieren haben sich beispielsweise 10 Minuten bis 48 Stunden erwiesen, obwohl auch eine längere Zeitdauer denkbar ist. Bevorzugt ist eine Zeitdauer für das Dispergieren von 15 Minuten bis 24 Stunden.

Druck- und Temperaturbedingungen beim Dispergieren sind im Allgemeinen unkritisch, so hat sich beispielsweise Normaldruck als geeignet erwiesen. Als Temperaturen haben sich beispielsweise Temperaturen im Bereich von 10°C bis 100°C als geeignet erwiesen, bevorzugt bis 80°C.

Durch das Dispergieren erhält man erfindungsgemäße wässrige Dispersion. In einer Ausführungsform der vorliegenden Erfindung weisen erfindungsgemäße wässrige Dispersionen einen Feststoffgehalt im Bereich von 3 bis 40%, bevorzugt bis 35%, besonders bevorzugt 5 bis 30% auf.

Während der Durchführung des Dispergierens kann man übliche Mahlhilfsmittel zusetzen.

Der mittlere Durchmesser von zumindest partiell mit Polyurethan (A) umhüllten Pigment (B) liegt nach dem Dispergieren üblicherweise im Bereich von 20 nm bis 1,5 µm, bevorzugt im Bereich von 60 bis 500 nm, besonders bevorzugt im Bereich von 60 bis 350 nm und bezeichnet im Zusammenhang mit der vorliegenden Erfindung allgemein das Volumenmittel. Geeignete Messgeräte zur Bestimmung des mittleren Partikeldurchmessers sind beispielsweise Coulter Counter, z.B. Coulter LS 230.

Wünscht man Ruß erfindungsgemäß als Pigment (B) einzusetzen, so bezieht sich der Partikeldurchmesser auf den mittleren Durchmesser der Primärpartikel. Erfindungsgemäße wässrige Dispersionen enthalten keinen thermischen Initiator, d.h. keine Verbindung, die bei 60°C eine Halbwertszeit von mindestens einer Stunde aufweist und dabei in freie Radikale zerfällt, wie beispielsweise Peroxide, Hydroperoxide, Wasserstoffperoxid, Persulfate, Azoverbindungen wie beispielsweise Azobisisobutyronitril (AIBN) oder wasserlösliche AIBN-Derivate, hochsubstituierte, insbesondere hexasubstituierte Ethanderivate oder Redoxkatalysatoren.

In einer Ausführungsform der vorliegenden Erfindung enthalten erfindungsgemäße wässrige Dispersionen mindestens ein Polyurethan (D). Polyurethan (D) ist beispielsweise erhältlich durch Umsetzung von Di- oder Polyisocyanat (b) mit Verbindung (c), enthält aber vorzugsweise keine Allophanatgruppen. Besonders bevorzugt ist Pigment (B) nicht nur mit Polyurethan (A) zumindest partiell umhüllt, sondern auch mit Polyurethan (D).

In einer Ausführungsform der vorliegenden Erfindung enthalten erfindungsgemäße wässrige Dispersionen Polyurethan (A) und Polyurethan (D) im Bereich von 10 : 1 bis 1 : 2, bevorzugt im Bereich von 8 : 1 bis 1 : 1 (Gewichtsverhältnis).

In einer Ausführungsform der vorliegenden Erfindung enthalten erfindungsgemäße wässrige Dispersionen mindestens einen Photoinitiator (E). Photoinitiator (E) kann man entweder vor dem Dispergieren oder aber nach dem Dispergieren zusetzen.

Geeignete Photoinitiatoren (E) können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 0 007 508, EP-A 0 057 474, DE-A 196 18 720, EP-A 0 495 751 und EP-A 0 615 980 beschrieben sind, beispielsweise 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, Hydroxyacetophenon, Phenylglyoxylsäure und ihre Derivate oder Gemische der vorstehend genannten Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, tert-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on,
Xanthen-9-on, 2,4-Dimethylthioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzoin-tetrahydropyranylether, Benzoin-methylether, Benzoin-ethylether, Benzoin-butylether, Benzoin-iso-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-tert-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugte Photoinitiatoren (E) sind beispielsweise solche Photoinitiatoren, die bei Aktivierung zerfallen, sogenannte α-Zerfaller wie beispielsweise Photoinitiatoren vom Benzildialkylketal-Typ wie z.B. Benzildimethylketal. Weitere Beispiele für geeignete α-Zerfaller sind Derivate von Benzoin, Isobutylbenzoinether, Phosphinoxide, insbesondere Mono- und Bisacylphosphinoxide, z.B. Benzoyldiphenylphosphinoxid, 2,4,6-Trimethylbenzoyldiphenylphosphinoxid, α-Hydroxyalkylacetophenone wie z.B. 2-Hydroxy-2-methylphenylpropanon (E.1), 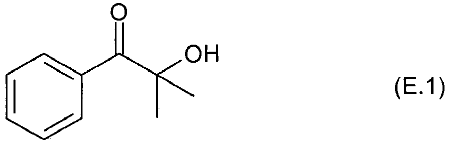 2-Hydroxy-1-[-4-(2-hydroxyethoxy)phenyl]-2-methyl-1-propanon (E.2) 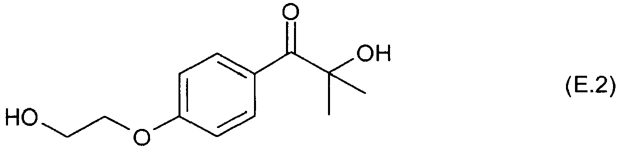 Phosphinsulfide und Ethyl-4-dimethylaminobenzoat sowie (E.3)

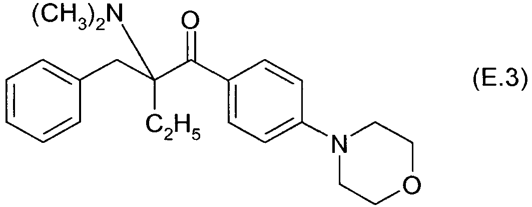

Weitere Beispiele für bevorzugte Photoinitiatoren (E) sind Wasserstoff-abstrahierende Photoinitiatoren, beispielsweise vom Typ der gegebenenfalls substituierten Acetophenone, Anthrachinone, Thioxanthone, Benzoesäureester oder der gegebenenfalls substituierten Benzophenone. Besonders bevorzugte Beispiele sind Isopropylthioxanthon, Benzophenon, Phenylbenzylketon, 4-Methylbenzophenon, halogenmethylierte Benzophenone, Anthron, Michlers Keton (4,4'-bis-N,N-dimethylaminobenzophenon), 4-Chlorbenzophenon, 4,4'-Dichlorbenzophenon, Anthrachinon.

In einer Ausführungsform der vorliegenden Erfindung setzt man erfindungsgemäßen wässrigen Dispersionen so viel Photoinitiator (E) zu, dass das Gewichtsverhältnis von Polyurethan (A) zu Photoinitiator (E) in einem Bereich von 3 : 1 bis 10.000 : 1, bevorzugt von 5 : 1 bis 5.000 : 1, ganz besonders bevorzugt in einem Gewichtsverhältnis von 10 : 1 bis 1.000 : 1 liegt.

Die Wirksamkeit von Photoinitiatoren (E) in erfindungsgemäßen wässrigen Dispersionen kann man, wenn es gewünscht wird, durch die Zugabe von mindestens einem Synergisten, beispielsweise von mindestens einem Amin, insbesondere von mindestens einem tertiärem Amin erhöhen. Geeignete Amine sind beispielsweise Triethylamin, N,N-Dimethylethanolamin, N-Methylethanolamin, Triethanolamin, Aminoacrylate wie beispielsweise aminmodifizierte Polyetheracrylate. Wenn man Amine wie beispielsweise tertiäre Amine als Katalysator bei der Synthese von Polyurethan (A) eingesetzt und nach der Synthese nicht abgetrennt hat, so kann auch als Katalysator verwendetes tertiäres Amin als Synergist wirken. Weiterhin kann zur Neutralisation von sauren Gruppen wie beispielsweise COOH-Gruppen oder SO₃H-Gruppen eingesetztes tertiäres Amin als Synergist wirken. Man kann bis zur doppelten molaren Menge Synergist zusetzen, bezogen auf eingesetzen Photoinitiator (E).

Man kann erfindungsgemäßen Dispersionen eine oder mehrere weitere Verbindungen mit C-C-Doppelbindungen (F) zusetzen, im folgenden auch als ungesättigte Verbindungen (F) bezeichnet. Besonders geeignete ungesättigte Verbindungen (F) sind beispielsweise Verbindungen der allgemeinen Formel I. Weitere besonders geeignete ungesättigte Verbindungen (F) sind solche der allgemeinen Formel F.1. 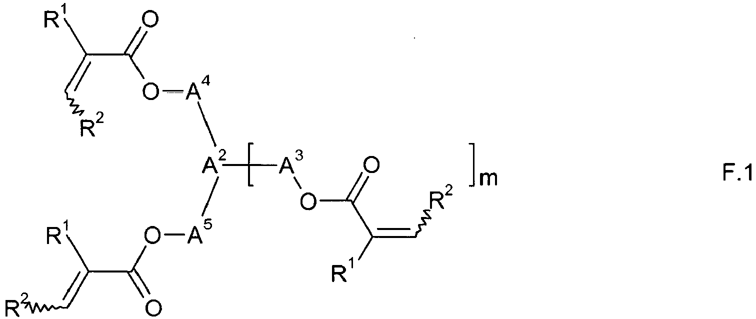 Dabei sind die Variablen wie folgt definiert:
- R¹, R²: gleich oder verschieden und unabhängig voneinander gewählt aus Wasserstoff und C₁-C₁₀-Alkyl,
- m: eine ganze Zahl von 0 bis 2, bevorzugt 1;
- A²: CH₂ oder -CH₂-CH₂- oder R⁸-CH oder para-C₆H₄ für den Fall, dass m = 0, CH, C-OH, C-O-C(O)-CH=CH₂, C-O-CO-C(CH₃)=CH₂, R⁸-C oder 1,3,5-C₆H₃ für den Fall, dass m = 1, und Kohlenstoff für den Fall, dass m = 2;
- R⁸: gewählt aus C₁-C₄-Alkyl, wie beispielsweise n-C₄H₉, n-C₃H₇, iso-C₃H₇ und vorzugsweise C₂H₅ und CH₃, oder Phenyl,
- A³, A⁴, A⁵: gleich oder verschieden und gewählt aus
C₁-C₂₀-Alkylen, wie beispielsweise -CH₂-, -CH(CH₃)-, -CH(C₂H₅)-, -CH(C₆H₅)-, -(CH₂)₂-, -(CH₂)₃-, -(CH₂)₄-, -(CH₂)₅-, -(CH₂)₆-, -(CH₂)₇-, -(CH₂)₈-, -(CH₂)₉-, -(CH₂)₁₀-, -CH(CH₃)-(CH₂)₂-CH(CH₃)-;
cis- oder trans-C₄-C₁₀-Cycloalkylen, wie beispielsweise cis-1,3-Cyclopentyliden, trans-1,3-Cyclopentyliden cis-1,4-Cyclohexyliden, trans-1,4-Cyclohexyliden;
C₁-C₂₀-Alkylen, in denen von einem bis zu sieben jeweils nicht benachbarte C-Atome durch Sauerstoff ersetzt sind, wie beispielsweise -CH₂-O-CH₂-, -(CH₂)₂-O-CH₂-, -(CH₂)₂-O-(CH₂)₂-, -[(CH₂)₂-O]₂-(CH₂)₂- -[(CH₂)₂-O]₃-(CH₂)₂-;
C₁-C₂₀-Alkylen, substituiert mit bis zu 4 Hydroxylgruppen, wobei in C₁-C₂₀-Alkylen von einem bis zu sieben jeweils nicht benachbarte C-Atome durch Sauerstoff ersetzt sind, wie beispielsweise -CH₂-O-CH₂-CH(OH)-CH₂-,
-CH₂-O-[CH₂-CH(OH)-CH₂]₂-, -CH₂-O-[CH₂-CH(OH)-CH₂]₃-;
C₆-C₁₄-Arylen, wie beispielsweise para-C₆H₄.

Besonders bevorzugte Beispiele für Verbindungen der allgemeinen Formel F.I sind Trimethylolpropantri(meth)acrylat, Tri(meth)acrylat von dreifach ethoxyliertem Trimethylolpropan, Pentaerythrittri(meth)acrylat und Pentaerythrittetra(meth)acrytat.

Weitere sehr gut geeignete Vertreter für ungesättigte Verbindungen (F) sind Ethylenglycoldi(meth)acrylat, Diethylenglykold(meth)acrylat, Triethylenglykold(meth)acrylat, Propylenglykol(meth)acrylat, Dipropylenglykoldi(meth)acrylat und Tripropylenglykoldi(meth)acrylat.

Weitere sehr gut geeignete Vertreter für ungesättigte Verbindungen (F) sind partiell oder erschöpfend (meth)acrylierte Polyole wie beispielsweise partiell oder erschöpfend (meth)acryliertes dimeres Trimethylolpropan, partiell oder erschöpfend (meth)acryliertes dimeres Trimethylolethan, partiell oder erschöpfend (meth)acrylierter dimerer Pentaerythrit.

Beispielsweise kann man insgesamt bis zu 100 Gew.-%, bezogen auf die Summe an (A) und (B), an ungesättigter Verbindung (F) zusetzen, bevorzugt bis zu 50 Gew.-% und besonders bevorzugt bis zu 25 Gew.-%.

Erfindungsgemäße wässrige Dispersionen lassen sich gut verwenden als oder zur Herstellung von Formulierungen zum Färben oder Bedrucken von Substraten, beispielsweise zur Herstellung von Färbeflotten für das Pigmentfärben oder zur Herstellung von Druckpasten für den Pigmentdruck. Ein Gegenstand der vorliegenden Erfindung ist daher die Verwendung von erfindungsgemäßen wässrigen Dispersionen als oder zur Herstellung von Formulierungen zum Färben oder Bedrucken von Substraten. Ebenso ist Gegenstand der vorliegenden Erfindung ein Verfahren zum Färben oder Bedrucken von Substraten unter Verwendung von mindestens einer erfindungsgemäßen wässrigen Dispersion.

Als Substrate sind geeignet:
cellulosehaltige Materialien wie Papier, Pappe, Karton, Holz und Holzwerkstoffe, die auch lackiert oder anderweitig beschichtet sein können,
metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
silikatische Materialien wie Glas, Porzellan und Keramik, die beschichtet sein können, polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
Lebensmittel und Teile von Lebensmittel, insbesondere Eierschalen,
Leder, sowohl Naturleder als auch Kunstleder, als Glatt-, Nappa- oder Velourleder, Lebensmittel und Kosmetika, und insbesondere
textile Substrate wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Mischgewebe wie beispielsweise Polyester/Polyurethan-Mischgewebe (z. B. Lycra®), Polyethylen-Polypropylen-Mischgewebe, Polyestermikrofasern und Glasfasergewebe.

Erfindungsgemäße wässrige Dispersionen sind besonders gut geeignet als oder zur Herstellung von Tinten für das Ink-Jet-Verfahren, insbesondere von wässrigen Tinten für das Ink-Jet-Verfahren. Ganz besonders gut lassen sich erfindungsgemäße wässrige Dispersionen verwenden zur Herstellung von Pigment-haltigen wässrigen Tinten für das Ink-Jet-Verfahren. Ein weiterer Gegenstand der vorliegenden Erfindung ist somit die Verwendung von erfindungsgemäßen wässrigen Dispersionen zur Herstellung von Tinten für das Ink-Jet-Verfahren. Ein weiterer Gegenstand der vorliegenden Erfindung ist ein Verfahren zur Herstellung von Tinten für das Ink-Jet-Verfahren unter Verwendung von mindestens einer erfindungsgemäßen wässrigen Dispersion.

Im Rahmen der vorliegenden Erfindung werden Tinten für das Ink-Jet-Verfahren auch als Ink-Jet-Tinten oder kurz als Tinten bezeichnet.

In einer Ausführungsform der vorliegenden Erfindung enthalten erfindungsgemäße Ink-Jet-Tinten 1 bis 40 Gew.-%, bevorzugt 2 bis 35 Gew.-% erfindungsgemäße wässrige Dispersion, wobei Angaben in Gew.-% jeweils auf das Gesamtgewicht der betreffenden erfindungsgemäßen Tinte bezogen sind.

Man kann erfindungsgemäße wässrige Dispersionen unmittelbar als Ink-Jet-Tinten einsetzen.

Erfindungsgemäße Tinten für das Ink-Jet-Verfahren können in einer anderen Ausführungsform mindestens einen Zuschlagstoff (G) enthalten.

In einer Ausführungsform der vorliegenden Erfindung stellt man erfindungsgemäße Ink-Jet-Tinten so her, dass man erfindungsgemäße wässrige Dispersion mit Wasser verdünnt und gegebenenfalls mit einem oder mehreren Zuschlagstoffen (G) vermischt.

In einer Ausführungsform der vorliegenden Erfindung stellt man den Feststoffgehalt von erfindungsgemäßen Ink-Jet-Tinten so ein, dass er im Bereich von 5 bis 40%, bevorzugt bis 35%, besonders bevorzugt 10 bis 30% liegt.

Als Zuschlagstoff (G) können erfindungsgemäße Tinten für das Ink-Jet-Verfahren ein oder mehrere organische Lösungsmittel enthalten. Niedermolekulare Polyethylenglykole sind bevorzugte Zuschlagstoffe (G), sie können vorzugsweise im Gemisch mit einem oder mehreren schwer verdampfbaren, in Wasser löslichen oder mit Wasser mischbaren organischen Lösungsmitteln eingesetzt werden.

Bevorzugte niedermolekulare Polyethylenglykole haben üblicherweise ein mittleres Molekulargewicht Mₙ von 100 bis 6000 g/mol, insbesondere bis 1500 g/mol, vor allem von 150 bis 500 g/mol. Als Beispiele seien Di-, Tri- und Tetraethylenglykol, Diethylenglykolmonomethyl-, -ethyl-, -n-, -iso-propyl -propyl- und -n-butylether, Triethylenglykolmonomethyl-, -ethyl-, -n-propyl-, -iso-propyl - und -n-butylether genannt

Wenn niedermolekulare Polyethylenglykole im Gemisch mit weiteren organischen Lösungsmitteln als Zuschlagstoff (G) verwendet werden, werden hierfür im Allgemeinen schwer verdampfbare (d.h. in der Regel bei Normaldruck einen Siedepunkt > 100°C aufweisende) und damit eine wasserrückhaltende Wirkung besitzende organische Lösungsmittel eingesetzt, die in Wasser löslich oder mit Wasser mischbar sind.

Als Lösungsmittel eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, Pentaerythrit, Pentite wie Arabit, Adonit und Xylit und Hexite wie Sorbit, Mannit und Dulcit.

Weitere geeignete Lösungsmittel sind Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polypropylenglykole mit mittleren Molekulargewichten Mₙ von 100 bis 6000 g/mol, insbesondere bis 1500 g/mol, vor allem von 150 bis 500 g/mol. Als Beispiele seien Di-, Tri- und Tetra-1,2- und -1,3-propylenglykol und Di-, Tri- und Tetra-1,2- und -1,3-propylenglykolmonomethyl-, -ethyl-, -n-propyl-, -iso-propyl- und -n-butylether genannt.

Zudem eignet sich auch niedermolekulares Polytetrahydrofuran als Lösungsmittel. Bevorzugt verwendetes niedermolekulares Polytetrahydrofuran hat üblicherweise ein mittleres Molekulargewicht M_{w} von 150 bis 500 g/mol, bevorzugt von 200 bis 300 g/mol und besonders bevorzugt von etwa 250 g/mol (entsprechend einer Molekulargewichtsverteilung).

Niedermolekulares Polytetrahydrofuran kann auf bekannte Weise über kationische Polymerisation von Tetrahydrofuran hergestellt werden. Dabei entstehen lineare Polytetramethylenglykole.

Weiterhin als Lösungsmittel geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel sind 1,2- und 1,3-Propylenglykol, Glycerin, Sorbit, Diethylenglykol, Polyethylenglykol (M_{w} 300 bis 500 g/mol), Diethylenglykolmonobutylether, Triethylenglykolmonobutylether, Pyrrolidon, N-Methylpyrrolidon und N-(2-Hydroxyethyl)pyrrolidon.

Niedermolekulares Polyethylenglykol kann auch mit einem oder mehreren (z.B. zwei, drei oder vier) der oben aufgeführten Lösungsmitteln gemischt werden.

In einer Ausführungsform der vorliegenden Erfindung können erfindungsgemäße Tinten für das Ink-Jet-Verfahren 0,1 bis 80 Gew.-%, bevorzugt 2 bis 60 Gew.-%, besonders bevorzugt 5 bis 50 Gew.-% und ganz besonders bevorzugt 10 bis 40 Gew.-%, nicht-wässrige Lösungsmittel enthalten.

Nicht-wässrige Lösungsmittel als Zuschlagstoffe (G), insbesondere auch die genannten besonders bevorzugten Lösungsmittelkombinationen, können vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittelgemisches noch verstärkt.

Erfindungsgemäße Tinten für das Ink-Jet-Verfahren können weitere Zuschlagstoffe (G), wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel-Marken der Fa. Avecia Lim.) und dessen Alkalimetallsalze, Glutardialdehyd und/oder Tetramethylolacetylendiharnstoff, Protectole®, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Netzmittel (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil erfindungsgemäßer Tinten für das Ink-Jet-Verfahren sind, beträgt ihre Gesamtmenge in der Regel 2 Gew.-%, insbesondere 1 Gew.-%, bezogen auf das Gewicht der erfindungsgemäßen Farbmittelzubereitungen und insbesondere der erfindungsgemäßen Tinten für das Ink-Jet-Verfahren.

Weitere geeignete Zuschlagstoffe (G) sind gegebenenfalls alkoxylierte Acetylendiole, beispielsweise der allgemeinen Formel II 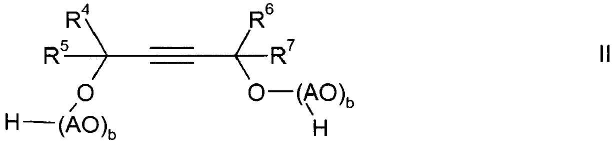 in denen die Variablen wie folgt definiert sind:
- AO: steht für gleiche oder verschiedene Alkylenoxideinheiten, beispielsweise Propylenoxideinheiten, Butylenoxideinheiten und insbesondere Ethylenoxideinheiten,
- R⁴, R⁵, R⁶, R⁷: sind jeweils gleich oder verschieden und gewählt aus C₁-C₁₀-Alkyl, unverzweigt oder verzweigt, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl; und Wasserstoff;
- b: ist gleich oder verschieden und gewählt aus ganzen Zahlen im Bereich von 0 bis 50, bevorzugt 0 oder 1 bis 30 und besonders bevorzugt 3 bis 20.

In einer bevorzugten Ausführungsform der vorliegenden Erfindung sind R⁵ oder R⁷ gleich Methyl.

In einer bevorzugten Ausführungsform der vorliegenden Erfindung sind R⁵ und R⁷ gleich Methyl, und R⁴ und R⁶ gleich Isobutyl.

Andere bevorzugte Zuschlagstoffe sind gegebenenfalls alkoxylierte Siliziumverbindungen der Formel III

[(CH₃)₃Si-O]₂-Si(CH₃)-O-(CH₂)₃-O(CH₂CH₂O)_{b}-H III

in der die Variable b wie vorstehend definiert ist.

Erfindungsgemäße Tinten für das Ink-Jet-Verfahren können weiterhin einen weiteren Photoinitiator enthalten, der nicht gleich dem Photoinitiator (E) ist, der bei der Herstellung von erfindungsgemäßer wässriger Dispersion eingesetzt werden kann, aber aus den oben genannten Photoinitiatoren gewählt wird.

In einer Ausführungsform der vorliegenden Erfindung haben erfindungsgemäße Tinten für das Ink-Jet-Verfahren eine dynamische Viskosität im Bereich von 2 bis 80 mPa·s, bevorzugt 3 bis 40 mPa·s, besonders bevorzugt bis 25 mPa·s, gemessen bei 23°C nach DIN 53018.

In einer Ausführungsform der vorliegenden Erfindung beträgt die Oberflächenspannung erfindungsgemäßer Tinten für das Ink-Jet-Verfahren 24 bis 70 mN/m, insbesondere 25 bis 60 mN/m, gemessen bei 25°C nach DIN 53993.

In einer Ausführungsform der vorliegenden Erfindung liegt der pH-Wert erfindungsgemäßer Tinten für das Ink-Jet-Verfahren bei 5 bis 10, vorzugsweise bei 8 bis 10.

Erfindungsgemäße Tinten für das Ink-Jet-Verfahren zeigen insgesamt vorteilhafte Anwendungseigenschaften, vor allem gutes Anschreibverhalten und gutes Dauerschreibverhalten (Kogation) sowie, insbesondere bei Verwendung der besonders bevorzugten Lösungsmittelkombination, gutes Trocknungsverhalten, und ergeben Druckbilder hoher Qualität, d.h. hoher Brillanz und Farbtiefe sowie hoher Reib-, Licht-, Wasser- und Nassreibechtheit. Besonders geeignet sind sie zum Drucken auf gestrichenes und ungestrichenes Papier sowie Textil.

Ein weiterer Aspekt der vorliegenden Erfindung ist ein Verfahren zur Herstellung von erfindungsgemäßen Tinten für das Ink-Jet-Verfahren. Das erfindungsgemäße Verfahren zur Herstellung von Tinten für das Ink-Jet-Verfahren ist dadurch gekennzeichnet, dass man mindestens eine erfindungsgemäße wässrige Dispersion, Wasser und gegebenenfalls mindestens einen Zuschlagstoff (G) miteinander vermischt, beispielsweise in einem oder in mehreren Schritten.

Als geeignete Vermischungstechniken sind beispielsweise Verrühren und intensives Schütteln zu nennen sowie das Dispergieren, beispielsweise in Kugelmühlen oder Rührwerkskugelmühlen.

Die Reihenfolge der Zugabe bei dem Vermischen von erfindungsgemäßer wässriger Dispersion, Wasser, gegebenenfalls (C), gegebenenfalls (D), gegebenenfalls (E), gegebenenfalls (F) und gegebenenfalls (G) ist an sich unkritisch.

So ist es in einer Variante der vorliegenden Erfindung möglich, dass man zunächst mindestens ein Polyurethan (A) synthetisiert, danach mit Pigment (B) dispergiert und danach mit einem oder mehreren der gewünschten Zusätze (C), (D), (E), (F) und/oder (G) vermischt und vor oder nach dem Vermischen mit Wasser verdünnt.

In einer anderen Variante der vorliegenden Erfindung synthetisiert man (a) mindestens ein Polyurethan (A) und mindestens ein Polyurethan (D), danach vermischt man mit Polymerisationsinhibitor (C) und dispergiert mit (B), verdünnt mit Wasser und vermischt gegebenenfalls mit einem oder mehreren der gewünschten Zusätze (E), (F) und/oder (G).

In einer anderen Variante der vorliegenden Erfindung synthetisiert man mindestens ein Polyurethan (A) in Gegenwart von Polymeriationsinhibitor (C) und dispergiert danach mit Pigment (B) und mindestens einem der gewünschten Zusätze Polyurethan (D) sowie (E), (F) und (G).

In einer anderen Variante der vorliegenden Erfindung synthetisiert man mindestens ein Polyurethan (A) und mindestens ein Polyurethan (D) in Gegenwart von Polymeristionsinhibitor (C) und dispergiert danach mit Pigment (B) und mindestens einem der gewünschten Zusätze (E), (F) und (G).

Ein weiterer Aspekt der vorliegenden Erfindung ist ein Verfahren zum Bedrucken von flächigen oder dreidimensionalen Substraten nach dem Ink-Jet-Verfahren unter Verwendung von mindestens einer erfindungsgemäßen Tinte für das Ink-Jet-Verfahren, im Folgenden auch erfindungsgemäßes Druckverfahren genannt. Zur Durchführung des erfindungsgemäßen Druckverfahrens druckt man mindestens eine erfindungsgemäße Ink-Jet-Tinte auf ein Substrat auf. In einer bevorzugten Variante des erfindungsgemäßen Druckverfahrens druckt man mindestens eine erfindungsgemäße Ink-Jet-Tinte auf ein Substrat und behandelt anschließend mit aktinischer Strahlung.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Tinten für das Bubble-Jet-Verfahren und für das Verfahren mittels eines piezoelektrischen Kristalls.

Erfindungsgemäße Tinten für das Ink-Jet-Verfahren lassen sich durch aktinische Strahlung härten, beispielsweise ist aktinische Strahlung mit einem Wellenlängenbereich von 200 nm bis 450 nm geeignet. Geeignet ist beispielsweise aktinische Strahlung mit einer Energie im Bereich von 70 mJ /cm² bis 2000 mJ/cm². Aktinische Strahlung kann man zweckmäßig beispielsweise kontinuierlich oder in Form von Blitzen einbringen.

In einer Ausführungsform der vorliegenden Erfindung kann man nach dem Bedrucken und vor dem Behandeln mit aktinischer Strahlung zwischentrocknen, beispielsweise thermisch oder mit IR-Strahlung. Geeignet sind beispielsweise Temperaturen im Bereich von 30 bis 120°C über einen Zeitraum im Bereich von 10 Sekunden bis 24 Stunden, bevorzugt eine bis zu 30 min, besonders bevorzugt bis zu 5 min. Als IR-Strahlung ist beispielsweise IR-Strahlung in einem Wellenbereich über 800 nm geeignet. Geeignete Vorrichtungen zum Zwischentrocknen sind beispielsweise Trockenschränke oder Vakuumtrockenschränke für thermische Zwischentrocknung, weiterhin IR-Lampen.

Auch die bei der Einwirkung von aktinischer Strahlung entwickelte Hitze kann zwischentrocknend wirken.

Erfindungsgemäße Tinten und Drucke, die unter Verwendung von erfindungsgemäßen Ink-Jet-Tinten hergestellt werden, lassen sich jedoch auch thermisch härten, und zwar mit oder ohne die Einwirkung von aktinischer Strahlung. So ist beispielsweise möglich, durch Trocknen bei Temperaturen im Bereich von 25 bis 150°C, bevorzugt 100 bis 150 °C, besonders bevorzugt 120 bis 150 °C Drucke zu fixieren, die unter Verwendung von erfindungsgemäßen Ink-Jet-Tinten hergestellt sind.

Eine weitere Ausführungsform der vorliegenden Erfindung sind Substrate, beispielsweise Papier, Pappe, Lebensmittel oder Teile von Lebensmitteln wie beispielsweise Eierschalen, und insbesondere textile Substrate, die nach einem der oben genannten erfindungsgemäßen Druckverfahren bedruckt wurden und sich durch besonders scharf gedruckte Bilder oder Zeichnungen sowie ausgezeichneten Griff auszeichnen. Außerdem weisen erfindungsgemäße bedruckte Substrate wenig "soft spots" auf.

Gemäß einer weiteren Ausführungsform der vorliegenden Erfindung kann man mindestens zwei, bevorzugt mindestens drei verschiedene erfindungsgemäße Tinten für das Ink-Jet-Verfahren zu Sets kombinieren, wobei verschiedene erfindungsgemäße Tinten jeweils unterschiedliche Pigmente mit jeweils unterschiedlicher Farbe enthalten.

Ein weiterer Gegenstand der vorliegenden Erfindung sind zumindest partiell umhüllte Pigmente, hergestellt durch Dispergieren von mindestens einem Pigment (B), mindestens einem Polymerisationsinhibitor (C) und mindestens einem Polyurethan (A), wobei Polyurethan (A) erhältlich ist durch Umsetzung von
(a) 15 bis 70 Gew.-%, bevorzugt 30 bis 60 Gew.-% Di- oder Polyisocyanat, das im Mittel 1 bis 10 Allophanatgruppen und im Mittel 1 bis 10 C-C-Doppelbindungen pro Molekül enthält, gegebenenfalls
(b) null bis 60 Gew.-%, bevorzugt bis 20 Gew.-% weiterem Di- oder Polyisocyanat mit
(c) 5 bis 50 Gew.-%, bevorzugt 30 bis 50 Gew.-% Verbindung mit mindestens zwei mit Isocyanat zur Reaktion befähigten Gruppen,
wobei Angaben in Gew.-% auf gesamtes Polyurethan (A) bezogen sind.

Ein spezieller Gegenstand der vorliegenden Erfindung sind zumindest partiell umhüllte vorstehend beschriebene Pigmente, dadurch gekennzeichnet, dass Di- oder Polyisocyanat (a) hergestellt ist durch Umsetzung von mindestens einem Di- oder Polyisocyanat (a1) mit mindestens einer Verbindung der allgemeinen Formel I 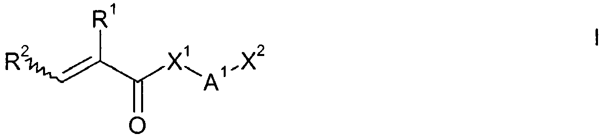 enthalten, in der die Variablen wie folgt definiert sind:
- R¹, R²: gleich oder verschieden und unabhängig voneinander gewählt aus Wasserstoff und C₁-C₁₀-Alkyl,
- X¹: gewählt aus Sauerstoff und N-R³,
- A¹: gewählt aus C₁-C₂₀-Alkylen, unsubstituiert oder ein- oder mehrfach substituiert mit C₁-C₄-Alkyl, Phenyl oder O-C₁-C₄-Alkyl, wobei in C₁-C₂₀-Alkylen eine oder mehrere nicht-benachbarte CH₂-Gruppen durch Sauerstoff ersetzt sein können;
- X²: gewählt aus Hydroxyl und NH-R³,
- R³: gleich oder verschieden und gewählt aus Wasserstoff, C₁-C₁₀-Alkyl und Phenyl.

Ein spezieller Gegenstand der vorliegenden Erfindung sind mit Polyurethan (A) zumindest partiell umhüllte Pigmente, dadurch gekennzeichnet, dass Polyurethan (A) hergestellt ist durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) null bis 60 Gew.-% weiterem Di- oder Polyisocyanat, mit
(c) 5 bis 50 Gew.-% Verbindung mit mindestens zwei mit Isocyanat zur Reaktion befähigten Gruppen und
(d) mindestens einer Verbindung der allgemeinen Formel I 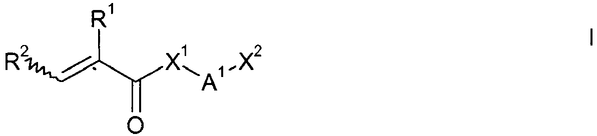
in der die Variablen wie folgt definiert sind:
- R¹, R²: gleich oder verschieden und unabhängig voneinander gewählt aus Wasserstoff und C₁-C₁₀-Alkyl,
- X¹: gewählt aus Sauerstoff und N-R³,
- A¹: gewählt aus C₁-C₂₀-Alkylen, unsubstituiert oder ein- oder mehrfach substituiert mit C₁-C₄-Alkyl, Phenyl oder O-C₁-C₄-Alkyl, wobei in C₁-C₂₀-Alkylen eine oder mehrere nicht-benachbarte CH₂-Gruppen durch Sauerstoff ersetzt sein können;
- X²: gewählt aus Hydroxyl und NH-R³,
- R³: gleich oder verschieden und gewählt aus Wasserstoff, C₁-C₁₀-Alkyl und Phenyl.

Ein Verfahren zur Herstellung von erfindungsgemäßen zumindest partiell umhüllten Pigmenten ist vorstehend beschrieben und ebenfalls Gegenstand der vorliegenden Erfindung.

Erfindungsgemäße zumindest partiell umhüllte Pigmente lassen sich beispielsweise aus erfindungsgemäßen wässrigen Dispersionen durch Entfernen des Wassers gewinnen, beispielsweise durch Trocknen, Gefriertrocknen, Filtrieren oder einer Kombination der vorstehend genannten Maßnahmen.

Erfindungsgemäße zumindest partiell umhüllte Pigmente eignen sich besonders gut zur Herstellung von Tinten für das Ink-Jet-Verfahren.

In einer Ausführungsform der vorliegenden Erfindung hat Polyurethan (A) eine Doppelbindungsdichte von 0,1 bis 5 mol/kg (A), bevorzugt 0,5 bis 3 mol/kg (A), ganz besonders bevorzugt 1 bis 2 mol/kg (A), bestimmbar beispielsweise durch Bestimmung der Hydrier-Iod-Zahl und durch ¹H-NMR-Spektroskopie.

Zur Verbesserung der Haltbarkeit von Polyurethan (A) versetzt man es während oder unmittelbar nach der Synthese mit mindestens einem Polymerisationsinhibitor (C).

Polyurethane (A) eigenen sich ganz besonders gut zur Herstellung von erfindungsgemäßen Ink-Jet-Tinten und zur Herstellung von erfindungsgemäßen wässrigen Dispersionen.

Die Erfindung wird durch Arbeitsbeispiele erläutert.

### Allgemeine Vorbemerkungen:

Der NCO-Gehalt wurde jeweils gemäß DIN 53185 titrimetrisch verfolgt.

Der Grad der Umhüllung von erfindungsgemäßen Pigmenten wurde durch Transmissionselektronenmikroskopie mit Gefrierbruchtechnik bestimmt.

Feststoffgehalt: Die Angaben in % beziehen sich m Rahmen der vorliegenden Erfindung stets auf Gew.-%. Feststoffgehalte werden im Rahmen der vorliegenden Erfindung stets durch 30-minütiges Trocknen bei 150°C ermittelt.

Die dynamische Viskosität wurde jeweils bei Zimmertemperatur bestimmt.

### I. Herstellung von erfindungsgemäßen zumindest partiell umhüllten Pigmenten

### I.1. Herstellung von erfindungsgemäßem Polyurethan (A.1)

### I.1.1 Herstellung von Diisocyanat (a.1), das Allophanatgruppen und C-C-Doppelbindungen enthält

Es wurde gemäß EP 1 144 476 B1, Beispiel 1.1 vorgegangen. In einem Rührkolben wurden Hexamethylendiisocyanat (HDI) (a.1.1) unter Stickstoffbedeckung mit 2-Hydroxyethylacrylat vermischt und auf 80°C erwärmt. Es wurden 200 Gew.-ppm N,N,N-Trimethyl-N-(2-hydroxypropyl)ammonium-2-ethylhexanoat 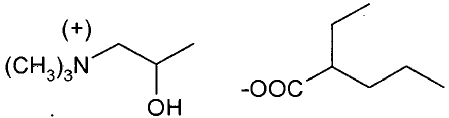 zugegeben und danach die Temperatur innerhalb einer halben Stunde auf 120°C erhöht. Danach wurde die entstehende Reaktionsmischung unter weiterem Rühren bei 120°C gehalten, bis der titrimetrisch bestimmte NCO-Gehalt 25 Gew.-% betrug, bezogen auf gesamte Reaktionsmischung. Mann stoppte die Reaktion durch Zugabe von 250 Gew.-ppm Di-(2-Ethylhexyl)-phosphat, bezogen auf (a.1.1). Das so erhältliche Gemisch wurde anschließend im Dünnschichtverdampfer bei 135°C und 2,5 mbar von nicht umgesetztem HDI befreit. Das so erhältliche Diisocyanat (a.1) hatte einen NCO-Gehalt von 15 Gew.-%, eine dynamische Viskosität von 1200 mPa·s bei 23°C. Der Rest-HDI-Gehalt war unter 0,5 Gew.-%. Die C-C-Doppelbindungsdichte betrug 2 C-C-Doppelbindungen pro Molekül.

### 1.1.2 Umsetzung von (a.1) zu erfindungsgemäßem Polyurethan (A.1)

75,7 g eines Polyesterdiols mit einem Molekulargewicht M_{w} von 800 g/mol, hergestellt durch Polykondensation von Isophthalsäure, Adipinsäure und 1,4-Dihydroxymethyl-cyclohexan (Isomerengemisch) in einem Molverhältnis von 1 : 1 : 2, wurden auf 120°C erwärmt. Die entstehende Schmelze wurde in einen 2-I-Reaktor gefüllt, ausgestattet mit Rührer, Rückflusskühler, Gaseinleitrohr und Tropftrichter, und unter Stickstoff auf 130°C erwärmt. Als das Polyesterdiol als klare Schmelze vorlag, wurde unter Rühren auf 80°C abgekühlt. Danach wurden 9,8 g Neopentylglykol und 32,3 g 1,1-Dimethylolpropionsäure sowie 0,28 g Polymerisationsinhibitor (C.1) und 0,14 g Polymerisationsinhibitor (C.2) zugegeben 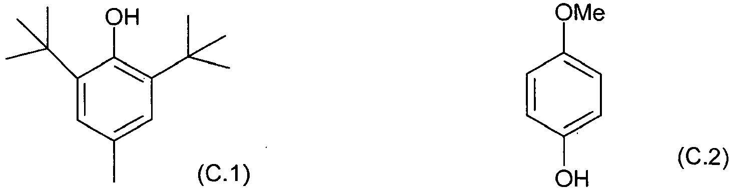 mit Me = CH₃ und danach auf 60°C abgekühlt. Danach wurden 278,4 g Tetrahydrofuran (THF), 111,4 g Diisocyanat (a.1) und 49,3 g Hexamethylendiisocyanat (HDI) (a.2.1) zugesetzt. Anschließend gab man 0,28 g Di-n-butylzinndilaurat zu (1000 ppm, bezogen auf gesamten Feststoffanteil) und rührte bei 60°C, bis der titrimetrisch bestimmte NCO-Gehalt auf 0,9 Gew.-%, bezogen auf gesamte Reaktionsmischung, gesunken war. Danach wurde mit Hilfe eines Eisbades auf Zimmertemperatur abgekühlt und die Reaktion durch Zugabe von 12,6 g Diethanolamin, gelöst in 12,6 g THF, abgestoppt. Anschließend neutralisierte man die Säuregruppen mit 24,3 g Triethylamin, gelöst in 24,3 g THF. Man erhielt erfindungsgemäßes Polyurethan (A.1). Die Glastemperatur T_{g} von erfindungsgemäßem Polyurethan (A.1) betrug 36°C.

### I.1.2 Umsetzung von (a.1) zu erfindungsgemäßem Polyurethan (A.2)

63,1 g eines Polyesterdiols mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1 : 1 : 2, wurden auf 120°C erwärmt. Die entstehende Schmelze wurde in einen 2-I-Reaktor gefüllt, ausgestattet mit Rührer, Rückflusskühler, Gaseinleitrohr und Tropftrichter, und unter Stickstoff auf 130°C erwärmt. Als das Polyesterdiol als klare Schmelze vorlag, wurde unter Rühren auf 80°C abgekühlt. Danach wurden 8,2 g Neopentylglykol und 26,8 g 1,1-Dimethylolpropionsäure sowie 0,3 g Polymerisationsinhibitor (C.1) und 0,15 g Polymerisationsinhibitor (C.2) zugegeben und danach auf 60°C abgekühlt. Danach wurden 297,5 g Tetrahydrofuran (THF), 185,6 g Diisocyanat (a.1) und 13,7 g Hexamethylendiisocyanat (HDI) (a.2.1) zugesetzt. Anschließend gab man 0,3 g Di-n-butylzinndilaurat zu (1000 ppm, bezogen auf gesamten Feststoffanteil) und rührte bei 60°C, bis der titrimetrisch bestimmte NCO-Gehalt auf 0,7 Gew.-%, bezogen auf gesamte Reaktionsmischung, gesunken war. Danach wurde mit Hilfe eines Eisbades auf Zimmertemperatur abgekühlt und die Reaktion durch Zugabe von 10,5 g Diethanolamin, gelöst in 10,5 g THF, abgestoppt. Anschließend neutralisierte man die Säuregruppen mit 20,2 g Triethylamin, gelöst in 20,2 g THF. Man erhielt erfindungsgemäßes Polyurethan (A.2). Die Glastemperatur T_{g} von erfindungsgemäßem Polyurethan (A.2) betrug 34°C.

### 1.1.3 Umsetzung von (a.1) zu erfindungsgemäßem Polyurethan (A.3)

75,7 g eines Polyesterdiols mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1 : 1 : 2, wurden auf 120°C erwärmt. Die entstehende Schmelze wurde in einen 2-I-Reaktor gefüllt, ausgestattet mit Rührer, Rückflusskühler, Gaseinleitrohr und Tropftrichter, und unter Stickstoff auf 130°C erwärmt. Als das Polyesterdiol als klare Schmelze vorlag, wurde unter Rühren auf 80°C abgekühlt. Danach wurden 9,8 g Neopentylglykol und 32,3 g 1,1-Dimethylolpropionsäure sowie 0,3 g Polymerisationsinhibitor (C.1) und 0,14 g Polymerisationsinhibitor (C.2) zugegeben und danach auf 60°C abgekühlt. Danach wurden 278,4 g Aceton, 111,4 g Diisocyanat (a.1) und 49,3 g Hexamethylendiisocyanat (HDI) (a.2.1) zugesetzt. Anschließend gab man 0,3 g Di-n-butylzinndilaurat zu (1000 ppm, bezogen auf gesamten Feststoffanteil) und rührte bei 60°C, bis der titrimetrisch bestimmte NCO-Gehalt auf 0,9 Gew.-%, bezogen auf gesamte Reaktionsmischung, gesunken war. Danach wurde mit Hilfe eines Eisbades auf Zimmertemperatur abgekühlt und die Reaktion durch Zugabe von 12,6 g Diethanolamin, gelöst in 12,6 g Aceton, abgestoppt. Anschließend neutralisierte man die Säuregruppen mit 24,3 g Triethylamin, gelöst in 24,3 g Aceton. Man erhielt erfindungsgemäßes Polyurethan (A.3). Die Glastemperatur T_{g} von erfindungsgemäßem Polyurethan (A.3) betrug 32°C.

### I.2. Herstellung von erfindungsgemäßen wässrigen Dispersionen von zumindest partiell umhüllten Pigmenten, allgemeine Vorschrift

Erfindungsgemäße wässrige Dispersionen wurden auf einer Schüttelapparatur (Fa. Skandex) mit 60 g Glaskugeln (Durchmesser 0,25 - 0,5 mm) hergestellt. Die Rezepturen sind in Tabelle 1 zusammengefasst. Nach Einwiegen der Ingredienzien und der Glaskugeln im Skandex wurde die resultierende Mischung für eine Zeit nach Tabelle 1 geschüttelt. Danach wurde eine Probe entnommen und der mittlere Durchmesser an dispergiertem Pigment bestimmt (Coulter Counter LS230) sowie Grad der Umhüllungs gemessen. Der pH-Wert wurde gemessen und -falls erforderlich - mit Triethanolamin auf 8 bis 8,5 eingestellt. Man erhielt die erfindungsgemäßen wässrigen Dispersionen WD.1 bis WD.3.

**Tabelle 1: Ingredienzien und Rezeptparameter für erfindungsgemäße wässrige Dispersionen WD.1 bis WD.3**

| Ingredienz | WD.1 | WD.2 | WD.3 |
|---|---|---|---|
| (B) [g] | 6 | 6 | 6 |
| (A.1) [g] | 6 | - | - |
| (A.2) [g] | - | 6 | - |
| (A.3) [g] | - | - | 6 |
| Biozid 1 [g] | 0,2 | 0,2 | 0,2 |
| (G.1) [g] | 0,08 | 0,08 | 0,08 |
| (G.2) [g] | 2 | 2 | 2 |
| Destilliertes Wasser [g] | 25,72 | 25,72 | 25,72 |
| Dispergierzeit [h] | 2 | 2 | 2 |
| Mittlerer Durchmesser Pigment [nm] | 61 | 74 | 65 |

| | | | |
|---|---|---|---|
| Mengen von Ingredienzien sind stets in g angegeben, wenn nicht ausdrücklich anders angegeben. (B): P.R. 122 gemäß C.I. (A.2) ist auf den Feststoffgehalt berechnet. | | | |

Es bedeutet:
Biozid 1: 20 Gew.-% Lösung von 1,2-Benziso-thiazolin-3-on in Propylenglykol Zuschlagstoffe: 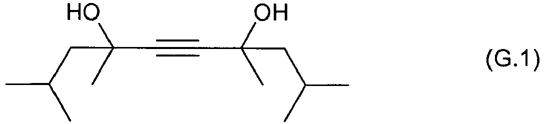
(G.2): Polyethylenglykol, Mₙ 200 g/mol.

### II. Formulierung von erfindungsgemäßen Tinten für das Ink-Jet-Verfahren

### II.1 Formulierung der erfindungsgemäßen magenta-farbenen Tinte T.1 für das Ink-Jet-Verfahren

In einem Becherglas wurden durch Verrühren miteinander vermischt:
20 g WD.1,
1 g Harnstoff,
0,36 g Photoinitiator (E.1)
3 g Polyethylenglykol mit einem mittleren Molekulargewicht Mₙ von 200 g/mol
4,5 g 1,2-Pentandiol
13 g Glycerin,
0,4 g einer 20 Gew.-% Lösung von Benzisothiazolin-3-on in Propylenglykol,
0,05 g ethoxyliertes Trisiloxan der Formel [(CH₃)₃Si-O]₂-Si(CH₃)-O-(CH₂)₃-O(CH₂CH₂O)₈-H
0,2 g Triethanolamin
57,49 g destilliertes Wasser.

Man filtrierte über ein Glasfaserfilter (Ausschlussgröße 1 µm) und erhielt die erfindungsgemäße Tinte T.1. Die erfindungsgemäße Tinte T.1 hatte einen pH-Wert von 8,9 und eine dynamische Viskosität von 3,4 mPa·s.

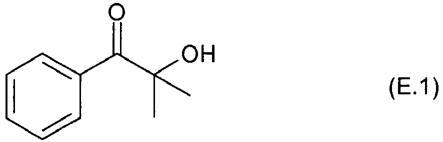

### II.2 Formulierung der erfindungsgemäßen magenta-farbenen Tinte T.2 für das Ink-Jet-Verfahren

In einem Becherglas wurden durch Verrühren miteinander vermischt:
20 g WD.2,
1 g Harnstoff,
3 g Polyethylenglykol mit einem mittleren Molekulargewicht Mₙ von 200 g/mol
4,5 g 1,2-Pentandiol
13 g Glycerin,
0,4 g einer 20 Gew.-% Lösung von Benzisothiazolin-3-on in Propylenglykol,
0,05 g ethoxyliertes Trisiloxan der Formel [(CH₃)₃Si-O]₂-Si(CH₃)-O-(CH₂)₃-O(CH₂CH₂O)₈-H
57,69 g destilliertes Wasser.

Man filtrierte über ein Glasfaserfilter (Ausschlussgröße 1 µm) und erhielt die erfindungsgemäße Tinte T2. Die erfindungsgemäße Tinte T.2 hatte einen pH-Wert von 8,4 und eine dynamische Viskosität von 3,7 mPa·s.

### II.3 Formulierung der erfindungsgemäßen magenta-farbenen Tinte T.3 für das Ink-Jet-Verfahren

In einem Becherglas wurden durch Verrühren miteinander vermischt:
20 g WD.3,
1 g Harnstoff,
0,36 g Photoinitiator (E.1)
3 g Polyethylenglykol mit einem mittleren Molekulargewicht Mₙ von 200 g/mol
4,5 g 1,2-Pentandiol
13 g Glycerin, ,
0,4 g einer 20 Gew.-% Lösung von Benzisothiazolin-3-on in Propylenglykol,
0,05 g ethoxyliertes Trisiloxan der Formel [(CH₃)₃Si-O]₂-Si(CH₃)-O-(CH₂)₃-O(CH₂CH₂O)₈-H
0,2 g Triethanolamin
57,49 g destilliertes Wasser.

Man filtrierte über ein Glasfaserfilter (Ausschlussgröße 1 µm) und erhielt die erfindungsgemäße Tinte T.3. Die erfindungsgemäße Tinte T.3 hatte einen pH-Wert von 9,1 und eine dynamische Viskosität von 3,5 mPa·s.

### III. Druckversuche mit erfindungsgemäßen Tinten für das Ink-Jet-Verfahren

Die erfindungsgemäße Tinte T.1, T.2 bzw. T.3 wurde in jeweils eine Kartusche gefüllt und mit einem Drucker Mimaki TX2 720 bei 720 dpi auf unbehandelter Baumwolle verdruckt. Man erhielt Drucke ohne Verstopfung von Düsen.

Es jeweils wurde nach drei Varianten fixiert:
Variante 1 war eine Belichtung mit aktinischer Strahlung ohne thermische Trocknung,
Variante 2 war eine thermische Trocknung ohne anschließende Belichtung,
Variante 3 war eine Belichtung mit aktinischer Strahlung mit anschließender thermischer Trocknung.

Für eine thermische Trocknung trocknete man 5 Minuten in einem Trockenschrank bei 150°C.

Für eine Bestrahlung mit aktinischer Strahlung setzte man ein UV-Bestrahlungsgerät der Fa. IST mit zwei verschiedenen UV-Strahlern: Eta Plus M-400-U2H, Eta Plus M-400-U2HC ein. Man belichtete 10 Sekunden und trug dabei eine Energie von 600 mJ/cm² ein.

Man erhielt die erfindungsgemäßen bedruckten Substrate S1.1 bis S1.3, S2.1 bis S2.3 und S3.1 bis S3.3 gemäß Tabelle 2 und bestimmte die Reibechtheit nach ISO-105-D02:1993 und die Waschechtheit nach ISO 105-C06:1994.

**Tabelle 2: Echtheiten von erfindungemäß bedruckter Baumwolle**

| Tinte | Härtung Variante | Substrat | Reibechtheit (trocken) | Reibechtheit (nass) | Waschechtheit |
|---|---|---|---|---|---|
| T.1 | 1 | S1.1 | 2-3 | 2 | 3 |
| T.1 | 2 | S1.2 | 3 | 2-3 | 4 |
| T.1 | 3 | S1.3 | 4 | 3-4 | 4 |
| T.2 | 1 | S2.1 | 3 | 3 | 4 |
| T.2 | 2 | S2.2 | 4 | 3 | 4 |
| T.2 | 3 | S2.3 | 4 | 3-4 | 4-5 |
| T.3 | 1 | S3.1 | 2-3 | 1-2 | 2-3 |
| T.3 | 2 | S3.2 | 4 | 2-3 | 3-4 |
| T.3 | 3 | S3.3 | 4 | 2-3 | 3-4 |

## Patentansprüche

1. Wässrige Dispersion, enthaltend ein zumindest partiell mit einem Polyurethan (A) umhülltes Pigment (B) und weiterhin mindestens einen Polymerisationsinhibitor (C), wobei Polyurethan (A) erhältlich ist durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindung mit mindestens zwei mit Isocyanat zur Reaktion befähigten Gruppen,
wobei Angaben in Gew.-% auf gesamtes Polyurethan (A) bezogen sind.

2. Wässrige Dispersion nach Anspruch 1, **dadurch gekennzeichnet, dass** Di- oder Polyisocyanat (a) hergestellt ist durch Umsetzung von mindestens einem Di- oder Polyisocyanat (a1) mit mindestens einer Verbindung der allgemeinen Formel I 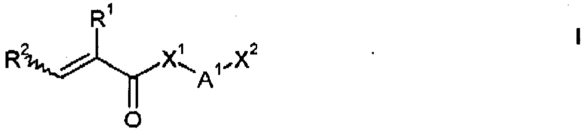 wobei die Variablen wie folgt definiert sind:
R¹, R² gleich oder verschieden und unabhängig voneinander gewählt aus Wasserstoff und C₁-C₁₀-Alkyl,
X¹ gewählt aus Sauerstoff und N-R³,
A¹ gewählt aus C₁-C₂₀-Alkylen, unsubstituiert oder ein- oder mehrfach substituiert mit C₁-C₄-Alkyl, Phenyl oder O-C₁-C₄-Alkyl, wobei in C₁-C₂₀-Alkylen eine oder mehrere nicht-benachbarte CH₂-Gruppen durch Sauerstoff ersetzt sein können;
X² gewählt aus Hydroxyl und NH-R³,
R³ gleich oder verschieden und gewählt aus Wasserstoff, C₁-C₁₀-Alkyl und Phenyl.

3. Wässrige Dispersion nach Anspruch 1 oder 2, **dadurch gekennzeichnet, dass** man mindestens eine Verbindung mit mindestens zwei mit Isocyanat zur Reaktion befähigten Gruppen (c) wählt aus 1,1,1-Trimethylol-C₁-C₄-Alkylcarbonsäuren, Zitronensäure, 1,1-Dimethylol-C₁-C₄-Alkylcarbonsäuren, 1,1-Dimethylol-C₁-C₄-Alkylsulfonsäuren, Poly-C₂-C₃-alkylenglykolen mit im Mittel 3 bis 300 C₂-C₃-Alkylenoxideinheiten pro Molekül, hydrophilen Polyaminen mit COOM- oder SO₃M-Gruppen, wobei M gewählt wird aus Alkalimetallionen und Ammoniumionen, Polyesterdiolen, die herstellbar sind durch Polykondensation von mindestens einem aliphatischen oder cycloaliphatischen Diol mit mindestens einer aliphatischen, aromatischen oder cycloaliphatischen Dicarbonsäure.

4. Wässrige Dispersion nach einem der Ansprüche 1 bis 3, enthaltend weiterhin mindestens ein Polyurethan (D), das durch Umsetzung von Di- oder Polyisocyanat (b) mit Verbindung mit mindestens zwei mit Isocyanat zur Reaktion befähigten Gruppen (c) erhältlich ist.

5. Wässrige Dispersion nach Anspruch 4, **dadurch gekennzeichnet, dass** Pigment (B) partiell mit Polyurethan (D) umhüllt ist.

6. Wässrige Dispersion nach einem der Ansprüche 1 bis 5, **dadurch gekennzeichnet, dass** Polyurethan (A) eine Glastemperatur T_{g} von maximal 60°C aufweist.

7. Wässrige Dispersion nach einem der Ansprüche 1 bis 6, enthaltend mindestens einen Photoinitiator (E).

8. Wässrige Dispersion nach einem der Ansprüche 1 bis 7, **dadurch gekennzeichnet, dass** man Polyurethan (A) herstellt durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindung mit mindestens zwei mit Isocyanat zur Reaktion befähigten Gruppen und
(d) Verbindung der allgemeinen Formel I,
wobei Angaben in Gew.-% auf gesamtes Polyurethan (A) bezogen sind.

9. Verfahren zur Herstellung von wässrigen Dispersionen nach mindestens einem der Ansprüche 1 bis 8, **dadurch gekennzeichnet, dass** man mindestens ein Pigment (B) mit mindestens einem Polyurethan (A) und mindestens einem Polymerisationsinhibitor (C) dispergiert und gegebenenfalls vor oder nach dem Dispergieren mindestens ein Polyurethan (D) zugibt.

10. Verfahren nach Anspruch 9, **dadurch gekennzeichnet, dass** man das Dispergieren in einer Kugelmühle durchführt.

11. Verwendung von wässrigen Dispersionen nach einem der Ansprüche 1 bis 8 als oder zur Herstellung von Formulierungen zum Färben oder Bedrucken von Substraten.

12. Verfahren zum Färben oder Bedrucken von Substraten unter Verwendung von mindestens einer wässrigen Dispersion nach einem der Ansprüche 1 bis 8.

13. Substrate, gefärbt oder bedruckt nach einem Verfahren nach Anspruch 12.

14. Verfahren zur Herstellung von Tinten für das Ink-Jet-Verfahren unter Verwendung von mindestens einer wässrigen Dispersion nach einem der Ansprüche 1 bis 8.

15. Tinten für das Ink-Jet-Verfahren, enthaltend mindestens eine wässrige Dispersion nach einem der Ansprüche 1 bis 8.

16. Verfahren zum Bedrucken von Substraten unter Verwendung von Tinten für das Ink-Jet-Verfahren nach Anspruch 15.

17. Bedruckte Substrate, erhältlich nach einem Verfahren nach Anspruch 16.

18. Zumindest partiell umhülltes Pigment, hergestellt durch Dispergieren von mindestens einem Pigment (B), mindestens einen Polymerisationsinhibitor (C) und mindestens einem Polyurethan (A), wobei Polyurethan (A) erhältlich ist durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindung mit mindestens zwei mit Isocyanat zur Reaktion befähigten Gruppen,
wobei Angaben in Gew.-% auf gesamtes Polyurethan (A) bezogen sind.

19. Zumindest partiell umhülltes Pigment nach Anspruch 18, **dadurch gekennzeichnet, dass** Di- oder Polyisocyanat (a) hergestellt ist durch Umsetzung von mindestens einem Di- oder Polyisocyanat (a1) mit mindestens einer Verbindung der allgemeinen Formel I 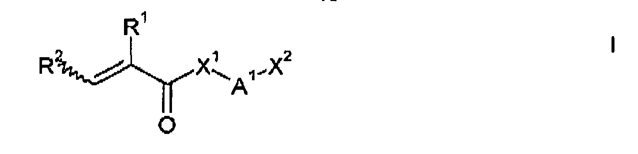 enthalten, in der die Variablen wie folgt definiert sind:
R¹, R² gleich oder verschieden und unabhängig voneinander gewählt aus Wasserstoff und C₁-C10-Alkyl,
X¹ gewählt aus Sauerstoff und N-R³,
A¹ gewählt aus C₁-C₂₀-Alkylen, unsubstituiert oder ein- oder mehrfach substituiert mit C₁-C₄-Alkyl, Phenyl oder O-C₁-C₄-Alkyl, wobei in C₁-C₂₀-Alkylen eine oder mehrere nicht-benachbarte CH₂-Gruppen durch Sauerstoff ersetzt sein können;
X² gewählt aus Hydroxyl und NH-R³,
R³ gleich oder verschieden und gewählt aus Wasserstoff, C₁-C₁₀-Alkyl und Phenyl.

20. Zumindest partiell umhülltes Pigment nach Anspruch 18 oder 19, **dadurch gekennzeichnet, dass** Polyurethan (A) hergestellt ist durch Umsetzung von
(a) 15 bis 70 Gew.-% Di- oder Polyisocyanat, das im Mittel 1 bis 10 Allophanatgruppen und im Mittel 1 bis 10 C-C-Doppelbindungen pro Molekül enthält, und gegebenenfalls
(b) 0 bis 60 Gew.-% weiterem Di- oder Polyisocyanat, mit
(c) 5 bis 50 Gew.-% Verbindung mit mindestens zwei mit Isocyanat zur Reaktion befähigten Gruppen und
(d) Verbindung der allgemeinen Formel I 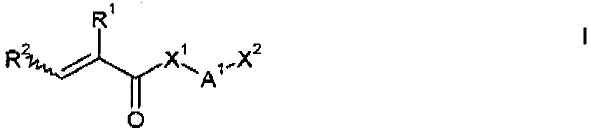
in der die Variablen wie folgt definiert sind:
R¹, R² gleich oder verschieden und unabhängig voneinander gewählt aus Wasserstoff und C₁-C₁₀-Alkyl,
X¹ gewählt aus Sauerstoff und N-R³,
A¹ gewählt aus C₁-C₂₀-Alkylen, unsubstituiert oder ein- oder mehrfach substituiert mit C₁-C₄-Alkyl, Phenyl oder O-C₁-C₄-Alkyl, wobei in C₁-C₂₀-Alkylen eine oder mehrere nicht-benachbarte CH₂-Gruppen durch Sauerstoff ersetzt sein können;
X² gewählt aus Hydroxyl und NH-R³,
R³ gleich oder verschieden und gewählt aus Wasserstoff, C₁-C₁₀-Alkyl und Phenyl.

## Claims

1. An aqueous dispersion comprising a pigment (B) at least partially enveloped by a polyurethane (A) and further comprising at least one polymerization inhibitor (C), said polyurethane (A) being obtainable by reaction of
(a) 15% to 70% by weight of di- or polyisocyanate comprising on average from 1 to 10 allophanate groups and on average from 1 to 10 C-C double bonds per molecule, and optionally
(b) 0% to 60% by weight of further di- or polyisocyanate, with
(c) 5% to 50% by weight of compound having at least two isocyanate-reactive groups,
weight %ages being based on total polyurethane (A).

2. The aqueous dispersion according to claim 1 wherein said di- or polyisocyanate (a) is prepared by reaction of at least one di- or polyisocyanate (a1) with at least one compound of the general formula I 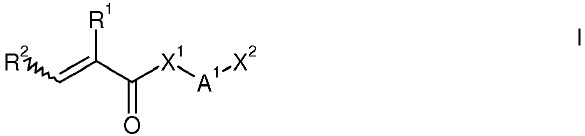
R¹ and R² are the same or different and are independently selected from hydrogen and C₁-C₁₀-alkyl,
X¹ is selected from oxygen and N-R³,
A¹ is selected from C₁-C₂₀-alkylene which is unsubstituted or singly or multiply substituted by C₁-C₄-alkyl, phenyl or O-C₁-C₄-alkyl, and in which one or more nonadjacent CH₂ groups may be replaced by oxygen;
X² is selected from hydroxyl and NH-R³,
R³ is in each occurrence the same or different and selected from hydrogen, C₁-C₁₀-alkyl and phenyl.

3. The aqueous dispersion according to claim 1 or 2 wherein at least one compound having at least two isocyanate-reactive groups (c) is selected from 1,1,1-trimethylol-C₁-C₄-alkylcarboxylic acids, citric acid, 1,1-dimethylol-C₁-C₄-alkylcarboxylic acids, 1,1-dimethylol-C₁-C₄-alkylsulfonic acids, poly-C₂-C₃-alkylene glycols having on average from 3 to 300 C₂-C₃-alkylene oxide units per molecule, hydrophilic polyamines having COOM or SO₃M groups, where M is selected from alkali metal ions and ammonium ions, polyesterdiols preparable by polycondensation of at least one aliphatic or cycloaliphatic diol with at least one aliphatic, aromatic or cycloaliphatic dicarboxylic acid.

4. The aqueous dispersion according to any one of claims 1 to 3 which further comprises at least one polyurethane (D) which is obtainable by reaction of di- or polyisocyanate (b) with compound having at least two isocyanate-reactive groups (c).

5. The aqueous dispersion according to claim 4 wherein said pigment (B) is partially enveloped by polyurethane (D).

6. The aqueous dispersion according to any one of claims 1 to 5 wherein said polyurethane (A) has a glass transition temperature T_{g} of not more than 60°C.

7. The aqueous dispersion according to any one of claims 1 to 6 which comprises at least one photoinitiator (E).

8. The aqueous dispersion according to any one of claims 1 to 7 wherein said polyurethane (A) is prepared by reaction of
(a) 15% to 70% by weight of di- or polyisocyanate comprising on average from 1 to 10 allophanate groups and on average from 1 to 10 C-C double bonds per molecule, and optionally
(b) 0% to 60% by weight of further di- or polyisocyanate, with
(c) 5% to 50% by weight of compound having at least two isocyanate-reactive groups, and
(d) compound of the general formula I,
wherein weight %ages are based on total polyurethane (A).

9. A process for producing aqueous dispersions according to at least one of claims 1 to 8, which comprises dispersing at least one pigment (B) with at least one polyurethane (A) and at least one polymerization inhibitor (C) and optionally adding at least one polyurethane (D) before or after said dispersing.

10. The process according to claim 9 wherein said dispersing is effected in a ball mill.

11. The use of aqueous dispersions according to any one of claims 1 to 8 as or for producing formulations for dyeing or printing substrates.

12. A process for dyeing or printing substrates, which comprises utilizing at least one aqueous dispersion according to any one of claims 1 to 8.

13. A substrate dyed or printed by a process according to claim 12.

14. A process for producing inks for the ink jet process, which comprises utilizing at least one aqueous dispersion according to any one of claims 1 to 8.

15. An ink for the ink jet process which comprises at least one aqueous dispersion according to any one of claims 1 to 8.

16. A process for printing substrates, which comprises utilizing inks for the ink jet process according to claim 15.

17. A printed substrate obtainable by a process according to claim 16.

18. An at least partially enveloped pigment produced by dispersing at least one pigment (B), at least one polymerization inhibitor (C) and at least one polyurethane (A), said polyurethane (A) being obtainable by reaction of
(a) 15% to 70% by weight of di- or polyisocyanate comprising on average from 1 to 10 allophanate groups and on average from 1 to 10 C-C double bonds per molecule, and optionally
(b) 0% to 60% by weight of further di- or polyisocyanate, with
(c) 5% to 50% by weight of compound having at least two isocyanate-reactive groups,
weight %ages being based on total polyurethane (A).

19. The at least partially enveloped pigment according to claim 18 wherein said di- or polyisocyanate (a) is prepared by reaction of at least one di- or polyisocyanate (a1) with at least one compound of the general formula I 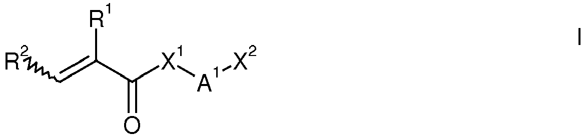 where
R¹ and R² are the same or different and are independently selected from hydrogen and C₁-C₁₀-alkyl,
X¹ is selected from oxygen and N-R³,
A¹ is selected from C₁-C₂₀-alkylene which is unsubstituted or singly or multiply substituted by C₁-C₄-alkyl, phenyl or O-C₁-C₄-alkyl, and in which one or more nonadjacent CH₂ groups may be replaced by oxygen;
X² is selected from hydroxyl and NH-R³,
R³ is in each occurrence the same or different and selected from hydrogen, C₁-C₁₀-alkyl and phenyl.

20. The at least partially enveloped pigment according to claim 18 or 19 wherein said polyurethane (A) is prepared by reaction of
(a) 15% to 70% by weight of di- or polyisocyanate comprising on average from 1 to 10 allophanate groups and on average from 1 to 10 C-C double bonds per molecule, and optionally
(b) 0% to 60% by weight of further di- or polyisocyanate, with
(c) 5% to 50% by weight of compound having at least two isocyanate-reactive groups, and
(d) compound of the general formula I 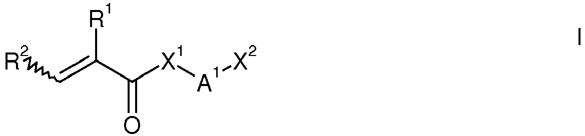
where
R¹ and R² are the same or different and are independently selected from hydrogen and C₁-C₁₀-alkyl,
X¹ is selected from oxygen and N-R³,
A¹ is selected from C₁-C₂₀-alkylene which is unsubstituted or singly or multiply substituted by C₁-C₄-alkyl, phenyl or O-C₁-C₄-alkyl, and in which one or more nonadjacent CH₂ groups may be replaced by oxygen;
X² is selected from hydroxyl and NH-R³,
R³ is in each occurrence the same or different and selected from hydrogen, C₁-C₁₀-alkyl and phenyl.

## Revendications

1. Dispersion aqueuse, contenant un pigment (B) au moins partiellement enrobé avec un polyuréthane (A) et en outre au moins un inhibiteur de polymérisation (C), le polyuréthane (A) pouvant être obtenu par mise en réaction de
(a) 15 à 70 % en poids d'un di- ou polyisocyanate, qui contient en moyenne 1 à 10 groupes allophanate et en moyenne 1 à 10 doubles liaisons C-C par molécule, et éventuellement
(b) 0 à 60 % en poids d'un autre di- ou polyisocyanate, avec
(c) 5 à 50 % en poids d'un composé contenant au moins deux groupes réactifs avec les isocyanates,
les données en % en poids se rapportant au polyuréthane (A) entier.

2. Dispersion aqueuse selon la revendication 1, **caractérisée en ce que** le di- ou polyisocyanate (a) est fabriqué par mise en réaction d'au moins un di- ou polyisocyanate (a1) avec au moins un composé de formule générale I 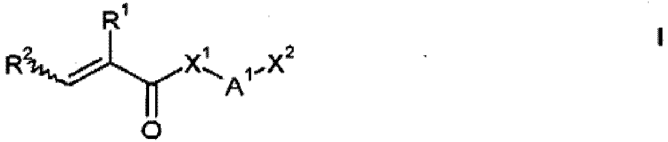 dans laquelle les variables ont les définitions suivantes :
R¹, R² identiques ou différents, et choisis indépendamment l'un de l'autre parmi hydrogène et alkyle en C₁-C₁₀,
X¹ choisi parmi oxygène et N-R³,
A¹ choisi parmi alkylène en C₁-C₂₀, non substitué ou substitué une ou plusieurs fois avec alkyle en C₁-C₄, phényle ou O-alkyle en C₁-C₄, un ou plusieurs groupes CH₂ non voisins dans l'alkylène en C₁-C₂₀ pouvant être remplacés par de l'oxygène ;
X² choisi parmi hydroxyle et NH-R³,
R³ identiques ou différents, et choisis parmi hydrogène, alkyle en C₁-C₁₀ et phényle.

3. Dispersion aqueuse selon la revendication 1 ou 2, **caractérisée en ce qu'**au moins un composé contenant au moins deux groupes réactifs avec les isocyanates (c) est choisi parmi les acides 1,1,1-triméthylol-alkyle en C₁-C₄-carboxyliques, l'acide citrique, les acides 1,1-diméthylol-alkyle en C₁-C₄-carboxyliques, les acides 1,1-diméthylol-alkyle en C₁-C₄-sulfoniques, les polyalkylène en C₂-C₃-glycols contenant en moyenne 3 à 300 unités oxyde d'alkylène en C₂-C₃ par molécule, les polyamines hydrophiles à groupes COOM ou SO₃M, M étant choisi parmi les ions de métaux alcalins et les ions ammonium, les polyester-diols, qui peuvent être fabriqués par polycondensation d'au moins un diol aliphatique ou cycloaliphatique avec au moins un acide dicarboxylique aliphatique, aromatique ou cycloaliphatique.

4. Dispersion aqueuse selon l'une quelconque des revendications 1 à 3, contenant en outre au moins un polyuréthane (D), qui peut être obtenu par mise en réaction d'un di- ou polyisocyanate (b) avec un composé contenant au moins deux groupes réactifs avec les isocyanates (c).

5. Dispersion aqueuse selon la revendication 4, **caractérisée en ce que** le pigment (B) est partiellement enrobé avec le polyuréthane (D).

6. Dispersion aqueuse selon l'une quelconque des revendications 1 à 5, **caractérisée en ce que** le polyuréthane (A) présente une température de transition vitreuse T_{g} d'au plus 60 °C.

7. Dispersion aqueuse selon l'une quelconque des revendications 1 à 6, contenant au moins un photoinitiateur (E).

8. Dispersion aqueuse selon l'une quelconque des revendications 1 à 7, **caractérisée en ce que** le polyuréthane (A) est fabriqué par mise en réaction de
(a) 15 à 70 % en poids d'un di- ou polyisocyanate, qui contient en moyenne 1 à 10 groupes allophanate et en moyenne 1 à 10 doubles liaisons C-C par molécule, et éventuellement
(b) 0 à 60 % en poids d'un autre di- ou polyisocyanate, avec
(c) 5 à 50 % en poids d'un composé contenant au moins deux groupes réactifs avec les isocyanates, et
(d) un composé de formule générale I,
les données en % en poids se rapportant au polyuréthane (A) entier.

9. Procédé de fabrication de dispersions aqueuses selon au moins l'une quelconque des revendications 1 à 8, **caractérisé en ce qu'**au moins un pigment (B) est dispersé avec au moins un polyuréthane (A) et au moins un inhibiteur de polymérisation (C), et au moins un polyuréthane (D) est éventuellement ajouté avant ou après la dispersion.

10. Procédé selon la revendication 9, **caractérisé en ce que** la dispersion est réalisée dans un broyeur à billes.

11. Utilisation de dispersions aqueuses selon l'une quelconque des revendications 1 à 8 en tant que ou pour la fabrication de formulations pour la coloration ou l'impression de substrats.

12. Procédé de coloration ou d'impression de substrats utilisant au moins une dispersion aqueuse selon l'une quelconque des revendications 1 à 8.

13. Substrats, colorés ou imprimés par un procédé selon la revendication 12.

14. Procédé de fabrication d'encres pour le procédé à jet d'encre utilisant au moins une dispersion aqueuse selon l'une quelconque des revendications 1 à 8.

15. Encres pour le procédé à jet d'encre, contenant au moins une dispersion aqueuse selon l'une quelconque des revendications 1 à 8.

16. Procédé d'impression de substrats utilisant des encres pour le procédé à jet d'encre selon la revendication 15.

17. Substrats imprimés, pouvant être obtenus par un procédé selon la revendication 16.

18. Pigment au moins partiellement enrobé, fabriqué par dispersion d'au moins un pigment (B), d'au moins un inhibiteur de polymérisation (C) et d'au moins un polyuréthane (A), le polyuréthane (A) pouvant être obtenu par mise en réaction de
(a) 15 à 70 % en poids d'un di- ou polyisocyanate, qui contient en moyenne 1 à 10 groupes allophanate et en moyenne 1 à 10 doubles liaisons C-C par molécule, et éventuellement
(b) 0 à 60 % en poids d'un autre di- ou polyisocyanate, avec
(c) 5 à 50 % en poids d'un composé contenant au moins deux groupes réactifs avec les isocyanates,
les données en % en poids se rapportant au polyuréthane (A) entier.

19. Pigment au moins partiellement enrobé selon la revendication 18, **caractérisé en ce que** le di- ou polyisocyanate (a) est fabriqué par mise en réaction d'au moins un di- ou polyisocyanate (a1) avec au moins un composé de formule générale I 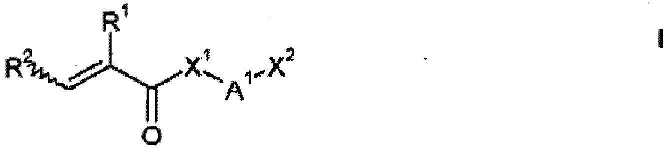 dans laquelle les variables ont les définitions suivantes :
R¹, R² identiques ou différents, et choisis indépendamment l'un de l'autre parmi hydrogène et alkyle en C₁-C₁₀,
X¹ choisi parmi oxygène et N-R³,
A¹ choisi parmi alkylène en C₁-C₂₀, non substitué ou substitué une ou plusieurs fois avec alkyle en C₁-C₄, phényle ou O-alkyle en C₁-C₄, un ou plusieurs groupes CH₂ non voisins dans l'alkylène en C₁-C₂₀ pouvant être remplacés par de l'oxygène ;
X² choisi parmi hydroxyle et NH-R³,
R³ identiques ou différents, et choisis parmi hydrogène, alkyle en C₁-C₁₀ et phényle.

20. Pigment au moins partiellement enrobé selon la revendication 18 ou 19, **caractérisé en ce que** le polyuréthane (A) est fabriqué par mise en réaction de
(a) 15 à 70 % en poids d'un di- ou polyisocyanate, qui contient en moyenne 1 à 10 groupes allophanate et en moyenne 1 à 10 doubles liaisons C-C par molécule, et éventuellement
(b) 0 à 60 % en poids d'un autre di- ou polyisocyanate, avec
(c) 5 à 50 % en poids d'un composé contenant au moins deux groupes réactifs avec les isocyanates, et
(d) un composé de formule générale I, 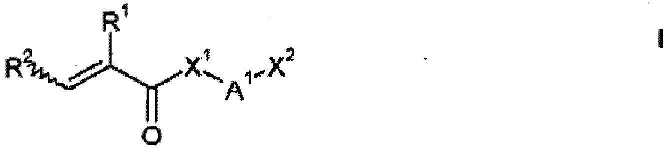
dans laquelle les variables ont les définitions suivantes :
R¹, R² identiques ou différents, et choisis indépendamment l'un de l'autre parmi hydrogène et alkyle en C₁-C₁₀,
X¹ choisi parmi oxygène et N-R³,
A¹ choisi parmi alkylène en C₁-C₂₀, non substitué ou substitué une ou plusieurs fois avec alkyle en C₁-C₄, phényle ou O-alkyle en C₁-C₄, un ou plusieurs groupes CH₂ non voisins dans l'alkylène en C₁-C₂₀ pouvant être remplacés par de l'oxygène ;
X² choisi parmi hydroxyle et NH-R³,
R³ identiques ou différents, et choisis parmi hydrogène, alkyle en C₁-C₁₀ et phényle.
